# EUROPÄISCHE PATENTSCHRIFT

(11) **EP 2 025 054 B1**
(45) Veröffentlichungstag und Bekanntmachung des Hinweises auf die Patenterteilung: **12.08.2015**
(21) Anmeldenummer: 07725726.9
(22) Anmeldetag: 01.06.2007
(51) Int. Cl.: H02P 6/00, H02P 6/14

(54) **VERFAHREN ZUM BETRIEB EINES ELEKTRONISCH KOMMUTIERTEN MOTORS, UND MOTOR ZUR DURCHFÜHRUNG EINES SOLCHEN VERFAHRENS**
METHOD FOR OPERATING AND ELECTRONICALLY COMMUTATED MOTOR, AND MOTOR FOR CARRYING OUT A METHOD SUCH AS THIS
PROCEDE DE FONCTIONNEMENT D'UN MOTEUR A COMMUTATION ELECTRONIQUE ET MOTEUR POUR METTRE EN OEUVRE LEDIT PROCEDE

(30) Priorität: 03.06.2006 DE 102006026669
(43) Veröffentlichungstag der Anmeldung: 18.02.2009
(73) Patentinhaber: ebm-papst St. Georgen GmbH & Co. KG, 78112 St. Georgen (DE)
(72) Erfinder: LÖFFLER, Jens, 78112 St. Georgen-Brigach (DE); KUNER, Arnold, 78112 St. Georgen (DE)
(74) Vertreter: Raible, Tobias
(86) Internationale Anmeldenummer: PCT/EP2007/004845
(87) Internationale Veröffentlichungsnummer: WO 2007/140927

(56) Entgegenhaltungen:
- WO-A-2006/089605
- US-A- 4 374 347
- US-B1- 6 188 187

## Beschreibung

Die Erfindung betrifft ein Verfahren zum Betrieb eines elektronisch kommutierten Motors, und einen Motor zur Durchführung eines solchen Verfahrens.

Es gibt verschiedene Bauarten von elektronisch kommutierten Motoren. Ein bekanntes Klassifikationssystem geht aus von der Zahl der Stromimpulse, welche dem Stator eines solchen Motors pro Rotordrehung von 360° el. zugeführt werden. Man kann deshalb unterscheiden in einpulsige Motoren, bei denen während einer Rotordrehung von 360° el. nur ein einziger antreibender Stromimpuls zugeführt wird, zweipulsige Motoren, bei denen während einer Rotordrehung von 360° el. zwei Statorstromimpulse zugeführt werden, die gewöhnlich einen zeitlichen Abstand voneinander haben, ferner dreipulsige Motoren, sechspulsige etc.

Ferner klassifiziert man solche Motoren nach der Zahl ihrer Statorwicklungsstränge, also einsträngige, zweisträngige, dreisträngige Motoren etc.

Zur vollständigen Definition einer Bauart muss man also die Zahl der Statorwicklungsstränge und die Pulszahl pro 360° el. angeben, z. B. ein zweipulsiger, zweisträngiger Motor. In Anlehnung an die Terminologie von Motoren, die mit Wechselstrom oder Drehstrom betrieben werden, bezeichnet man die zweipulsigen Motoren auch als einphasige Motoren, wobei also ein einphasiger Motor entweder einen oder zwei Wicklungsstränge haben kann.

Bei einem zweisträngigen Motor hat man eine erste Serienschaltung aus einem ersten Wicklungsstrang und einem ersten steuerbaren Halbleiterschalter, sowie eine zweite Serienschaltung aus einem zweiten Wicklungsstrang und einem zweiten steuerbaren Halbleiterschalter. Den beiden Wicklungssträngen wird alternierend Strom zugeführt, um ein zur Drehung des permanentmagnetischen Rotors notwendiges Magnetfeld zu erzeugen. (Im Allgemeinen ist ein solcher Motor auch dazu ausgebildet, in den Drehstellungsbereichen ein sogenanntes Reluktanzmoment zu erzeugen, wo das elektrisch erzeugte Drehmoment Lücken hat, vgl. z.B. die DE 23 46 380 C2.)

Ein solcher Motor wird gewöhnlich an einer Gleichstromquelle betrieben, z.B. an einer Batterie, einem Netzgerät, oder an einem Gleichrichter, der die Spannung eines Wechsel- oder Drehstromnetzes gleichrichtet und einem Gleichstrom-Zwischenkreis (dc link) zuführt, aus dem der Motor mit Gleichstrom versorgt wird. Meist ist an diesen Zwischenkreis ein Kondensator angeschlossen, den man als Zwischenkreis-Kondensator bezeichnet.

Wenn Strom durch einen Wicklungsstrang fließt, wird in diesem Energie in Form eines Magnetfelds gespeichert. Bezeichnet man die Induktivität eines solchen Stranges mit L und den Strom mit I, so berechnet sich diese Energie nach der Formel W=0,5*L*I² ...(1).

Soll zur Erzeugung eines umlaufenden Magnetfeldes von einem ersten auf einen zweiten Wicklungsstrang umgeschaltet werden, was man als Kommutierung bezeichnet, so muss diese gespeicherte Energie zunächst abgebaut werden.

Wird ein stromführender Wicklungsstrang abgeschaltet, so entsteht durch die Wirkung der so genannten Selbstinduktion an diesem Wicklungsstrang ein Spannungsanstieg, der durch die gespeicherte magnetische Energie bewirkt wird. Dadurch können sehr hohe Spannungen entstehen. Folglich muss man Halbleiterschalter mit hoher Spannungsfestigkeit verwenden.

Eine gewisse Verbesserung kann man erreichen durch Verwendung eines Zwischenkreis-Kondensators, der dazu dient, die im Wicklungsstrang magnetisch gespeicherte Energie in Form von elektrischer Energie aufzunehmen und dadurch die Spannung zu begrenzen, welche am Gleichstrom-Zwischenkreis des Motors auftritt. Dieser Kondensator nimmt also im Betrieb Energie auf und gibt sie anschließend sofort wieder ab, d.h. auf den Zuleitungen dieses Kondensators fließt ständig Strom, den man auch als "Rippelstrom" bezeichnet. Je größer der benötigte Kondensator ist, umso größer wird der Rippelstrom.

Derartige Kondensatoren stellen, was die Materialkosten betrifft, eine preiswerte Lösung des geschilderten Problems dar, doch benötigt man relativ große Kondensatoren, gewöhnlich sogenannte Elektrolytkondensatoren, und deren Lebensdauer ist begrenzt und wird noch zusätzlich durch die starke Erwärmung reduziert, die beim Lötvorgang und durch den Ripplestrom unvermeidlich auftritt. Die so herabgesetzte Lebensdauer des Kondensators wirkt sich also auf die des Motors aus.

Eine weitere Möglichkeit zum Begrenzen der Spannungsspitzen, die beim Abschalten eines Wicklungsstranges auftreten, ist es, Zenerdioden zu verwenden, oder - bei Verwendung einer FET-Endstufe - die sog. Avalanche-Energie auszunutzen. Dabei wird die Energie, welche beim Abschalten im abzuschaltenden Wicklungsstrang gespeichert ist, in den genannten Halbleiterelementen in Wärme umgewandelt. Aus der Sicht der verwendeten Halbleiterelemente ist das Verlustleistung, und man muss deshalb entsprechend leistungsfähige Bauelemente verwenden.

Auch ist die in Wärme umgewandelte Energie "verloren" und kann nicht mehr zum Antrieb des Rotors genutzt werden, d. h. der Wirkungsgrad eines solchen Motors ist niedriger.

Es ist deshalb eine Aufgabe der Erfindung, ein neues Verfahren zum Betrieb eines elektronisch kommutierten Motors, sowie einen neuen Motor zur Durchführung eines solchen Verfahrens, bereit zu stellen.

Nach einem ersten Aspekt der Erfindung wird diese Aufgabe gelöst durch ein Verfahren gemäß Patentanspruch 1. Bei der Erfindung wird also ein zusätzlicher steuerbarer Halbleiterschalter verwendet, welcher in der Zuleitung vom Gleichstrom-Zwischenkreis zur genannten Parallelschaltung angeordnet ist. Dies bietet die Möglichkeit, die Energiezufuhr von einer externen Gleichstromquelle zum Motor zu einem günstigen Zeitpunkt abzuschalten und die Energie, die zum Abschaltzeitpunkt in dem betreffenden Wicklungsstrang gespeichert ist, über einen speziellen Freilaufkreis in ein motorisches Drehmoment zu transformieren. So wird die Energie, welche im betreffenden Wicklungsstrang vor der Kommutierung gespeichert ist, nicht in Wärme verwandelt oder in einem Kondensator zwischengespeichert, sondern direkt zur Drehmomentbildung genutzt. Dieser Vorgang, bei dem die im abzuschaltenden Strang gespeicherte magnetische Energie direkt in mechanische Energie umgesetzt wird, stellt einen Teil des Kommutierungsvorganges dar, sozusagen als Vorspiel zum eigentlichen Akt der Umschaltung des Stromes vom einen auf den anderen Wicklungsstrang.

Dabei ist es besonders vorteilhaft, wenn der Freilaufkreis, durch den der Strom des abzuschaltenden Wicklungsstranges fließt, erst dann unterbrochen wird, wenn die in der betreffenden Statorwicklung gespeicherte Energie abgebaut und somit diese Statorwicklung annähernd oder vollständig stromlos ist. So kann durch die Steuerung des Halbleiterschalters, welcher in der Zuleitung zur Parallelschaltung angeordnet ist, eine stromlose, verlustarme Kommutierung ermöglicht werden, und diese ermöglicht einen höheren Wirkungsgrad, aber auch die Verwendung kleinerer Bauelemente und höherer Leistungsdichten.

Eine andere Lösung der gestellten Aufgabe ergibt sich durch einen elektronisch kommutierten Motor gemäß Anspruch 2, Eine solche Lösung ermöglicht eine kompakte Bauweise eines solchen Motors und einen guten Wirkungsgrad.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: ein Übersichts-Schaltbild einer bevorzugten Ausführungsform eines Motors nach der Erfindung,
- Fig. 2: eine Darstellung analog Fig. 1, bei der die Halbleiterschalter und die Ströme für den linken Wicklungsstrang 30 explizit dargestellt sind, um das Verständnis der Erfindung zu erleichtern,
- Fig. 3: eine Darstellung analog Fig. 2, bei der die Ströme für den rechten Wicklungsstrang 32 explizit dargestellt sind, um das Verständnis der Erfindung zu erleichtern,
- Fig. 4: eine Darstellung der Ströme, welche in den Statorsträngen 30, 32 im Betrieb fließen,
- Fig. 5: eine Darstellung analog Fig. 2; diese Darstellung dient zum besseren Verständnis von sprunghaften Änderungen der in der Statorwicklung fließenden Ströme,
- Fig. 6: eine Darstellung verschiedener Spannungen und Ströme, wie sie im Motor gemäß Fig. 1 bis 5 im Betrieb vorkommen,
- Fig. 7: eine Darstellung analog Fig. 5, welche Signale 66, 68 zeigt, die in einem Motor gemäß Fig. 2 gemessen werden können, wenn der Strom in den Strängen - vor einer Kommutierung - den Wert Null erreicht hat,
- Fig. 8: eine Darstellung, welche ein Ersatzschaltbild für die beiden Statorwicklungsstränge zeigt; der Rotor ist nicht dargestellt,
- Fig. 9 und 10: die Darstellung von Schaltungsvarianten, wie sie vor allem nützlich sind, wenn ein preiswerter µC 26 verwendet werden soll,
- Fig. 11: eine Routine, wie sie zur Einstellung einer Variablen Tv verwendet wird,
- Fig. 12: ein Schaltbild, welches nach Art eines Katalogs verschiedene Schaltungsvarianten zeigt, die im Rahmen der Erfindung einzeln oder in Kombination verwendet werden können,
- Fig. 13: ein Prinzipschaltbild, welches erläutert, weshalb am Drain D des übergeordneten Transistors 60 (Fig. 2) Spannungsspitzen auftreten können,
- Fig. 14: Schaltungsmaßnahmen, die zur Reduzierung von Spannungsspitzen am übergeordneten Transistor 60 möglich sind,
- Fig. 15: ein Schaltbild, welches Möglichkeiten zur verlustarmen Begrenzung des Motorstroms zeigt,
- Fig. 16: ein Zustandsdiagramm für eine bevorzugte Variante der Erfindung, und
- Fig. 17: eine vereinfachte Version der Fig. 16 für die Erläuterung der bevorzugten Variante.

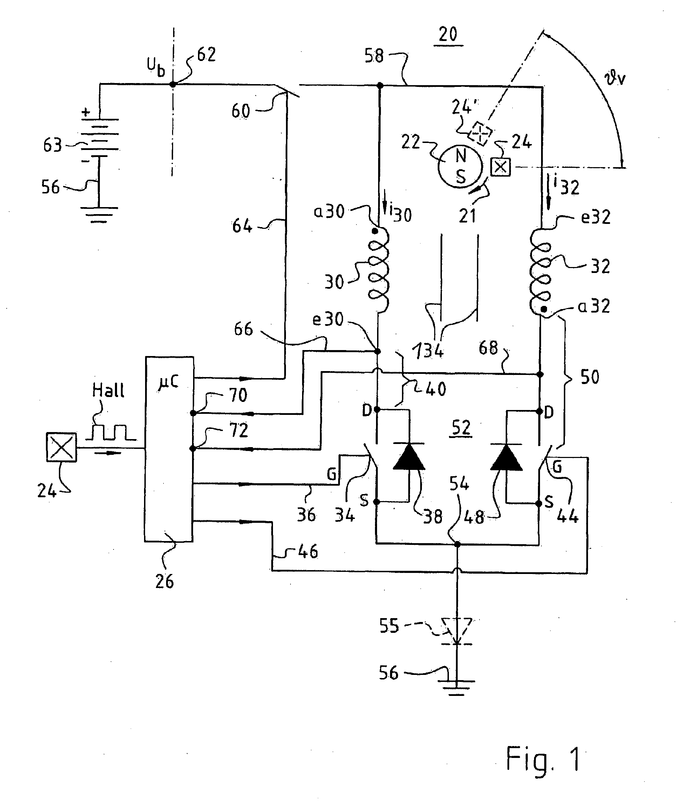

**Fig. 1** zeigt eine Prinzipdarstellung eines Motors 20 nach einer bevorzugten Ausführungsform der Erfindung. Dieser hat einen nur schematisch angedeuteten permanentmagnetischen Rotor 22, dessen Drehrichtung mit 21 bezeichnet ist, um die Versetzung eines Hallsensors 24 entgegen der Drehrichtung grafisch darstellen zu können. Der Rotor 22 ist zweipolig dargestellt, doch kann er auch vier, sechs etc. Pole haben, und es kann z. B. ein Innenrotor, ein Außenrotor, oder der Rotor eines Motors mit ebenem oder konischem Luftspalt sein.

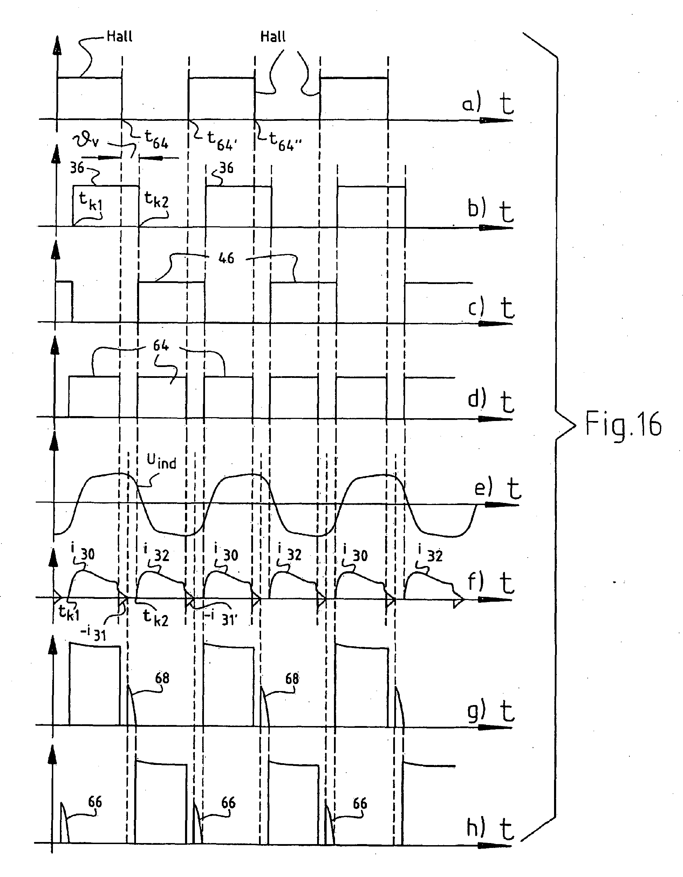

Dieser Rotor 22 steuert den Hallsensor 24, der in Fig. 1 auch links dargestellt ist und der im Betrieb ein Signal "Hall" erzeugt, das in Fig. 1 schematisch dargestellt ist und einem Mikrocontroller µC 26 zugeführt wird, der dem Motor 20 zugeordnet und gewöhnlich in diesen eingebaut ist. Die Stromversorgung des µC 26 mit einer geregelten Spannung von z.B. 5 V ist nicht dargestellt, da dem Fachmann bekannt. Derartige µCs werden in sehr großen Stückzahlen in elektronisch kommutierten Motoren (ECMs) verwendet, um deren Funktionen zu steuern, z.B. die Kommutierung, die Regelung der Drehzahl, die Begrenzung des Motorstroms etc. Bei der Variante nach Fig. 16 kann ggf. statt eines µC auch ein ASIC für das Bauteil 26 verwendet werden.

Der Motor 20 hat zwei Statorwicklungsstränge 30, 32, die magnetisch gekoppelt sind, wie durch ein Symbol 34 angedeutet. Gewöhnlich werden die Wicklungsstränge 30, 32 mit zwei parallelen Drähten gewickelt, was man als "bifilare Wicklung" bezeichnet. Dabei werden die beiden Drähte, von denen jeder einen Wicklungsstrang bildet, im Betrieb in entgegengesetzter Richtung vom Strom durchflossen, so dass sie Magnetpole mit entgegengesetzter Polarität erzeugen. Der Wicklungssinn wird bei dieser Wicklungsart üblicherweise durch einen Punkt am entsprechenden Wicklungsanfang dargestellt. Die Anschlüsse der Stränge 30, 32 sind wie folgt bezeichnet:

### Wicklungsstrang 30

Mit Punkt: a30
Ohne Punkt: e30

### Wicklungsstrang 32

Mit Punkt: a32
Ohne Punkt: e32

In Reihe mit dem ersten Wicklungsstrang 30 liegt ein erster steuerbarer Halbleiterschalter 34, der in Fig. 1 nur symbolisch angedeutet ist und der vom µC 26 über eine Steuerleitung 36 gesteuert wird. Antiparallel zum Halbleiterschalter 34 liegt eine Freilaufdiode 38. Der erste Wicklungsstrang 30 bildet zusammen mit dem ersten Halbleiterschalter 34 und der Diode 38 eine erste Serienschaltung 40, die naturgemäß weitere Elemente enthalten kann.

In Reihe mit dem zweiten Wicklungsstrang 32 liegt ein zweiter steuerbarer Halbleiterschalter 44, der ebenfalls nur symbolisch angedeutet ist und der vom µC 26 über eine Steuerleitung 46 gesteuert wird. Antiparallel zum Halbleiterschalter 44 liegt eine Freilaufdiode 48. Der zweite Wicklungsstrang 32 bildet zusammen mit dem zweiten Halbleiterschalter 44 und der Diode 48 eine zweite Serienschaltung 50, die naturgemäß weitere Elemente enthalten kann.

Wie Fig. 1 zeigt, sind die beiden Serienschaltungen 40, 50 zu einer Parallelschaltung 52 parallel geschaltet, deren Fußpunkt 54, ggf. über eine Diode 55, mit Masse 56 verbunden ist und die an dem in Fig. 1 oberen Ende mit einem Gleichstrom-Zwischenkreis (dc link) 58 verbunden ist. An diesem Zwischenkreis sind wie dargestellt die Anschlüsse a30 und e32 der beiden Wicklungsstränge 30, 32 angeschlossen, d. h. wenn der Halbleiterschalter 34 leitet, fließt ein Strom i30 vom Anschluss a30 zum Anschluss e30 durch den ersten Strang 30, und wenn der Halbleiterschalter 44 leitet, fließt ein Strom i32 vom Anschluss e32 zum Anschuss a32 des Strangs 32. Jedoch muss diese Aussage für die Zeitabschnitte kurz vor einer Kommutierung modifiziert werden, wie nachfolgend erläutert.

Der Gleichstrom-Zwischenkreis 58 ist über einen dritten Halbleiterschalter 60 mit einem Motoranschluss 62 verbunden, an den im Betrieb eine positive Spannung Ub angelegt wird, z. B. von 12, 24, 48 oder 60 V gegen Masse 56. Eine Gleichstromquelle 63 beliebiger Art ist symbolisch dargestellt, um das Verständnis zu erleichtern. Der dritte Halbleiterschalter 60 wird über eine Steuerleitung 64 ebenfalls vom µC 26 gesteuert.

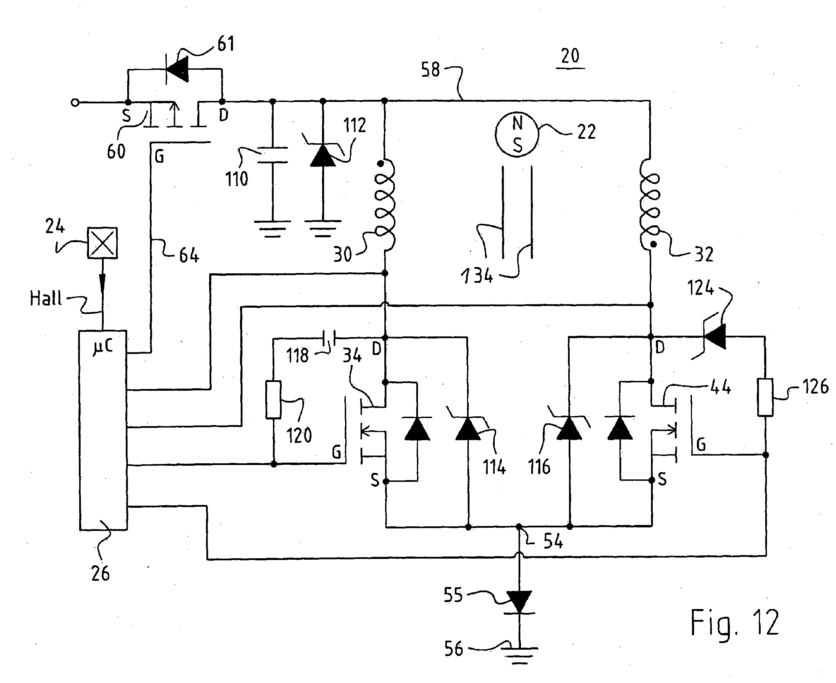

Dem µC 26 wird über eine Sensorleitung 66 ein Potenzial vom Anschluss e30 zugeführt, und über eine Sensorleitung 68 wird ihm ein Potenzial vom Anschluss a32 zugeführt. An diesen Anschlüssen treten, wenn der betreffende Strang 30 oder 32 stromlos ist, Spannungen auf, die vom permanentmagnetischen Rotor 22 in diesen Strängen induziert werden und die im µC 26 verarbeitet werden können, um den Beginn der Kommutierungsvorgänge auf Zeitpunkte festzulegen, bei denen der Motor 20 günstig arbeitet. Dies bedeutet,
a) dass der Motor gut ausgenutzt wird, d. h. dass die Stromimpulse i30, i32 nicht zu kurz werden,
b) dass der Motor 20 in einem Bereich mit gutem Wirkungsgrad arbeitet, d. h. dass die elektrische Energie, die dem Motor 20 am Anschuss 62 zugeführt wird, in einen hohen Prozentsatz von mechanischer Energie und einen möglichst geringen Prozentsatz von Wärmeenergie umgesetzt wird, und
c) dass die vom Motor 20 erzeugte Blindleistung gering ist, so dass für den Gleichstrom-Zwischenkreis nur ein kleiner oder gar kein Kondensator benötigt wird. Ein solcher Zwischenkreis-Kondensator 110 ist in Fig. 12 beispielhaft dargestellt.

Nachfolgend wird die Arbeitsweise erläutert. Sie erfordert ein geschicktes Zusammenspiel der Steuerung der drei Halbleiterschalter 34, 44 und 60. Zum MOSFET 60 ist eine Diode 61 antiparallel geschaltet.

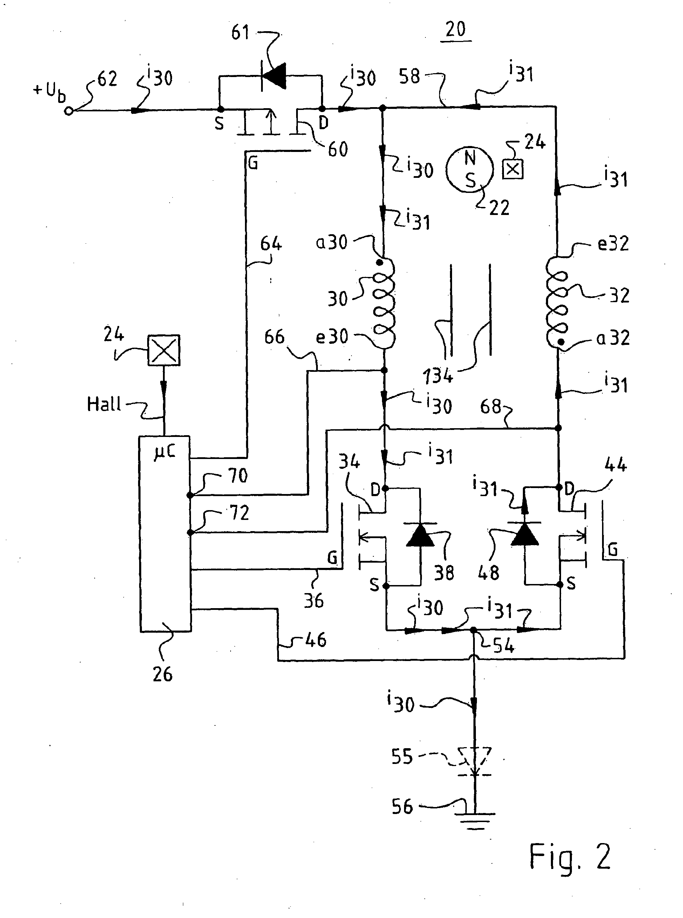

In Fig. 2 sind die Halbleiterschalter 34, 44 als n-Kanal-MOSFETs und der und der Schalter 60 als p-Kanal-MOSFET dargestellt. Es werden dieselben Bezeichnungen verwendet, wie in Fig. 1.

Die Source S der beiden MOSFETs 34 und 44 ist mit dem Knotenpunkt 54 verbunden. Der Drain D des Transistors 34 ist mit dem Anschluss e30 verbunden, und der Drain D des Transistors 44 mit dem Anschluss a32.

Der Drain D des Transistors 60 ist mit dem Gleichstrom-Zwischenkreis 58 verbunden, und seine Source S mit dem Anschuss 62. Die Gates G werden in der dargestellten Weise vom µC 26 gesteuert.

### Wirkungsweise von Fig. 2

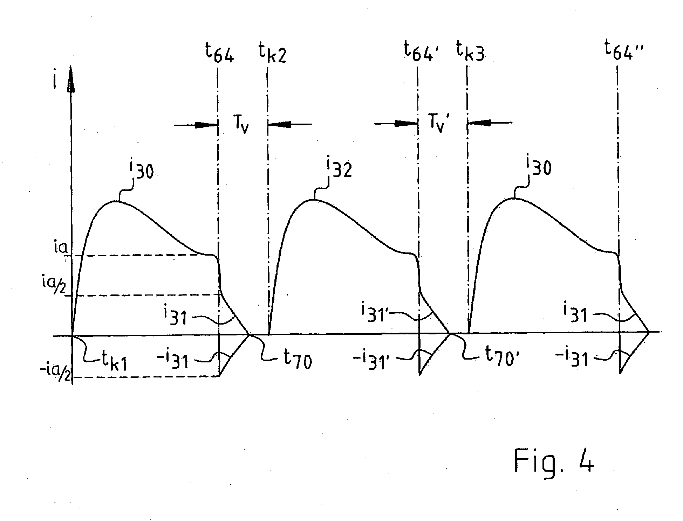

Hierzu wird auf die Fig. 2 bis 5 Bezug genommen. Kurz vor dem Zeitpunkt tK1 der Fig. 4 sind in Fig. 2 alle drei Transistoren 34, 44 und 60 gesperrt, und der Motor 20 erhält folglich keine Energie vom Anschuss 62, d.h. die Energiezufuhr von außen ist gesperrt.

Zum Zeitpunkt tK1 werden die Transistoren 34 und 60 durch den µC 26 eingeschaltet, so dass vom Anschluss 62 ein Strom i30 über den Transistor 60, den Zwischenkreis 58, den Wicklungsstrang 30, den Transistor 34 und ggf. eine Diode 55 (falls vorhanden) nach Masse 56 fließt. Die Form dieses Stromes i30 ergibt sich aus Fig. 4, und sie verläuft etwa komplementär zur sog. induzierten Spannung, die der Rotor 22 bei seiner Drehung in den Strängen 30 und 32 induziert. Diese Spannung wird auch als Gegen-EMK (BACK EMF) bezeichnet, weil sie der Spannung Ub, die an den Anschuss 62 angelegt wird, entgegen wirkt.

Auf den Kommutierungszeitpunkt tK1 folgen weitere Kommutierungszeitpunkte tK2, tK3 etc., wie in Fig. 4 dargestellt.

Aus der augenblicklichen Drehzahl des Rotors 22 kann man den nachfolgenden Kommutierungszeitpunkt tK2 recht exakt vorausberechnen. In einem vorgegebenen zeitlichen Abstand Tv vor tK2 liegt ein Zeitpunkt t64, dessen rechnerische Ermittlung nachfolgend erläutert wird, und an diesem Zeitpunkt t64 wird der Transistor 60 gesperrt, so dass die Zufuhr des Stromes i30 vom Anschuss 62 unterbrochen wird, d. h. dem Motor 20 wird während des Zeitraumes Tv keine Energie aus der Gleichstromquelle 63 zugeführt.

Im Wicklungsstrang 30 fließt kurz vor dem Zeitpunkt t64 ein Strom ia, vgl. Fig. 4, so dass im Strang 30 eine Energie gespeichert ist, die sich gemäß der Formel (1) berechnen lässt, sofern die Induktivität L des Stranges 30 bekannt ist.

Diese gespeicherte Energie bewirkt, dass jetzt ein Kreisstrom i31 durch den ersten Strang 30 fließt, da der Transistor 34 weiterhin leitend ist. Dieser Kreisstrom i31 fließt also vom Anschluss e30 über den Transistor 34, den Knotenpunkt 54, die Freilaufdiode 48 zum Anschluss a32, durch den zweiten Strang 32, den Zwischenkreis 58, zum Anschluss a30 und durch den ersten Strang 30 zurück zum Anschluss e30.

Der Strom i31 fließt also durch beide Stränge 30 und 32, aber in Fig. 2 durch den Strang 30 von oben nach unten, und durch den Strang 32 von unten nach oben.

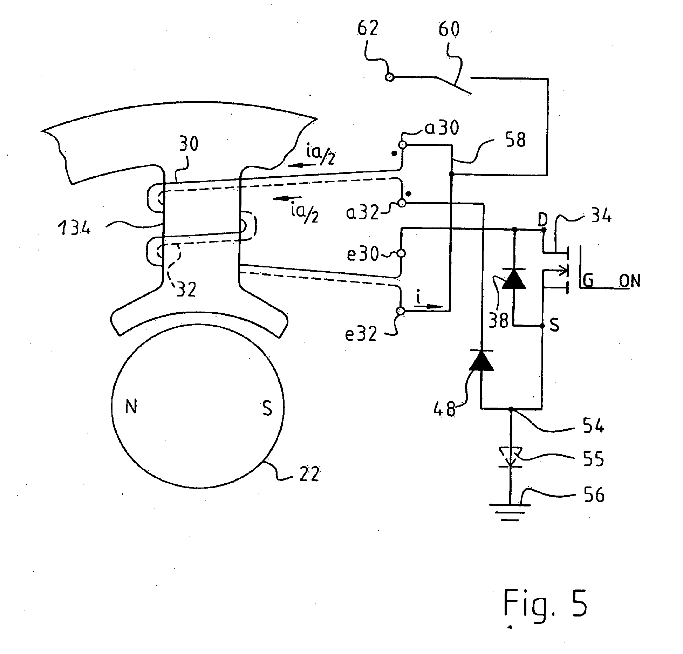

Dies ist in **Fig. 5** etwas anschaulicher dargestellt. Fig. 5 zeigt den Strom ia/2 zum Zeitpunkt t64 der Abschaltung des Transistors 60. Durch jeden der beiden Stränge 30, 32 fließt jetzt der Strom ia/2, und die Wirkung dieser Ströme addiert sich zur gleichen Wirkung, wie sie der volle Strom ia hatte, der kurz vor dem Zeitpunkt t64 nur durch den ersten Strang 30 floss. Der Wirkungsgrad wird verbessert, da sich in diesem Zustand der Kupferquerschnitt verdoppelt.

Die Wirkung ist also, dass zum Zeitpunkt t64 der Strom im Strang 30 um etwa 50 % niedriger wird, und dass zur Kompensation der Strom i31 im Strang 32 von Null auf den Wert ia/2 springt.

So kann der antreibende Strom in den Statorwicklungen 30 und 32 nach dem Öffnen des Transistors 60 weiter fließen, so dass die im Strang 30 gespeicherte magnetische Energie in kinetische Energie umgesetzt wird und den Rotor 22 weiterhin antreibt.

Dabei sinkt der Strom i31 relativ rasch und erreicht zu einem Zeitpunkt t70 (Fig. 4) den Wert Null. Ab t70 kann folglich der Transistor 34 gesperrt werden, da der Strom i31 zu Null geworden ist.

Der Zeitpunkt t70 liegt zeitlich kurz vor dem nachfolgenden Kommutierungszeitpunkt tK2, vgl. **Fig. 4**, so dass zum Zeitpunkt tK2 eine normale Kommutierung möglich ist und vorgenommen wird.

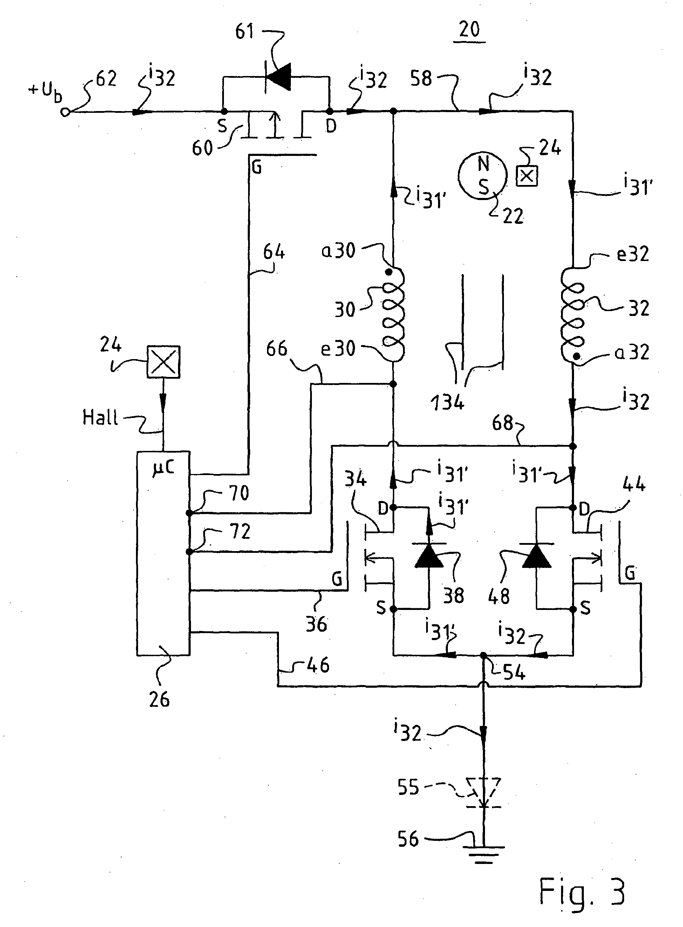

**Fig. 3** zeigt den Zustand, wenn der Transistor 34 gesperrt und der Transistor 44 eingeschaltet ist und anschließend gesperrt wird.

### Wirkungsweise von Fig. 3

Hierzu wird auf die Fig. 3 und 4 Bezug genommen. Kurz vor dem Zeitpunkt t_{K2} der Fig. 4 sind in Fig. 3 alle drei Transistoren 34,44 und 60 gesperrt, und der Motor 20 erhält folglich keine Energie vom Anschluss 62, d.h. die Energiezufuhr von außen ist gesperrt.

Zum Zeitpunkt t_{K2} werden die Transistoren 44 und 60 durch den µC 26 eingeschaltet, so dass vom Anschluss 62 ein Strom i₃₂ über den Transistor 60, den Zwischenkreis 58, den Wicklungsstrang 32, den Transistor 44 und ggf. die Diode 55 nach Masse 56 fließt. Die Form dieses Stromes i₃₂ ergibt sich aus Fig. 4.

Auf den Kommutierungszeitpunkt t_{K2} folgt der Kommutierungszeitpunkt t_{K3}. In einem vorgegebenen zeitlichen Abstand Tv' vor t_{K3} liegt ein Zeitpunkt t64', dessen rechnerische Ermittlung nachfolgend erläutert wird, und zu diesem Zeitpunkt t64' wird der Transistor 60 gesperrt, so dass die Zufuhr des Stromes i₃₂ vom Anschluss 62 unterbrochen wird, d.h. dem Motor 20 wird während des Zeitraums Tv' keine Energie vom Anschluss 62 zugeführt.

Im Wicklungsstrang 32 fließt kurz vor dem Zeitpunkt t₆₄' ein Strom i₃₂ = ia, vgl. Fig. 4 und Fig. 5, so dass im Strang 32 eine Energie gespeichert ist, die sich gemäß der Formel (1) berechnen lässt, sofern die Induktivität L des Stranges 32 bekannt ist. (Diese ist im Normalfall gleich groß wie die Induktivität des Stranges 30.)

Diese gespeicherte Energie bewirkt, dass jetzt ein Kreisstrom i₃₁' durch die beiden Stränge 30 und 32 fließt, da der Transistor 44 weiterhin leitend ist. Dieser Kreisstrom i₃₁' entspricht dem Kreisstrom i₃₁ der Fig. 2, fließt aber in der entgegengesetzten Richtung, nämlich vom Anschluss a32 über den Transistor 44, den Knotenpunkt 54, die Freilaufdiode 38 zum Anschluss e30, durch den ersten Strang 30, den Zwischenkreis 58, zum Anschluss e32 und durch den zweiten Strang 32 zurück zum Anschluss a32.

Der Kreisstrom i₃₁' fließt also durch beide Stränge 30 und 32, aber in Fig. 3 durch den Strang 32 von oben nach unten, und durch den Strang 30 von unten nach oben.

Wie zuvor bei Fig. 5 beschrieben, ist die Wirkung, dass zum Zeitpunkt t64' der Strom im Strang 32 um 50 % niedriger wird, und dass stattdessen der Strom i₃₁' im Strang 30 von 0 auf diesen selben, um 50 % niedrigeren Wert ansteigt, wobei die ohmschen Verluste reduziert werden, da sich der Kupferquerschnitt verdoppelt.

So kann also der antreibende Strom in den Statorwicklungen 30 und 32 nach dem Sperren des Transistors 60 weiter fließen, so dass die im Strang 32 gespeicherte magnetische Energie in kinetische Energie umgesetzt wird und den Rotor 22 weiterhin antreibt.

Dabei sinkt die Höhe des Stromes i₃₁' relativ rasch und erreicht zu einem Zeitpunkt t70' (Fig. 4) den Wert 0. Ab t70' kann folglich der Transistor 44 ohne Verluste gesperrt werden, da der Strom i₃₁' zu Null geworden ist. Dies ermöglicht die Verwendung preiswerter, leistungsschwächerer Bauteile.

Der Zeitpunkt t70' liegt zeitlich kurz vor dem nachfolgenden Kommutierungszeitpunkt t_{K3}, vgl. Fig. 4, so dass zum Zeitpunkt t_{K3} eine normale Kommutierung möglich ist und vorgenommen wird.

Durch die Erfindung erreicht man also, dass im Betrieb, d.h. nach dem Hochlaufen des Motors 20 auf seine Betriebsdrehzahl, die bei einem zweisträngigen, zweipulsigen Motor 20 gespeicherte magnetische Energie des abzuschaltenden Stranges durch "Stromkreisen" (Strom i₃₁ in Fig. 2, oder i₃₁' in Fig. 3) in Antriebsenergie für den Rotor 22 umgewandelt wird. Anders als bei den zweisträngigen, zweipulsigen Motoren nach dem Stand der Technik wird also der größte Teil dieser Energie nicht in Wärme umgewandelt oder in einem Zwischenkreis-Kondensator als elektrische Energie zwischengespeichert, so dass sich der Wirkungsgrad verbessert und man nur einen relativ kleinen Zwischenkreis-Kondensator benötigt, der meist kleiner ist als bei den Motoren nach dem Stand der Technik.

Wenn die magnetische Energie in mechanische Energie umgewandelt ist, führt bei Fig. 3 der Strang 32 keinen Strom mehr. Dies ist in Fig. 4 zum Zeitpunkt t70' der Fall. Erreicht nun der Rotor 20 den Zeitpunkt t70' der Fig. 4, so kann der Transistor 44 verlustfrei abgeschaltet und anschließend zum Zeitpunkt t_{K3} der Transistor 34 verlustfrei eingeschaltet werden, und der übergeordnete Transistor 60 kann wieder eingeschaltet werden, um dem Motor 20 Energie von außen zuzuführen, z.B. aus der Spannungsquelle 63.

Die Vorgänge gemäß Fig. 2 und Fig. 3 wechseln sich also im Betrieb ständig ab.

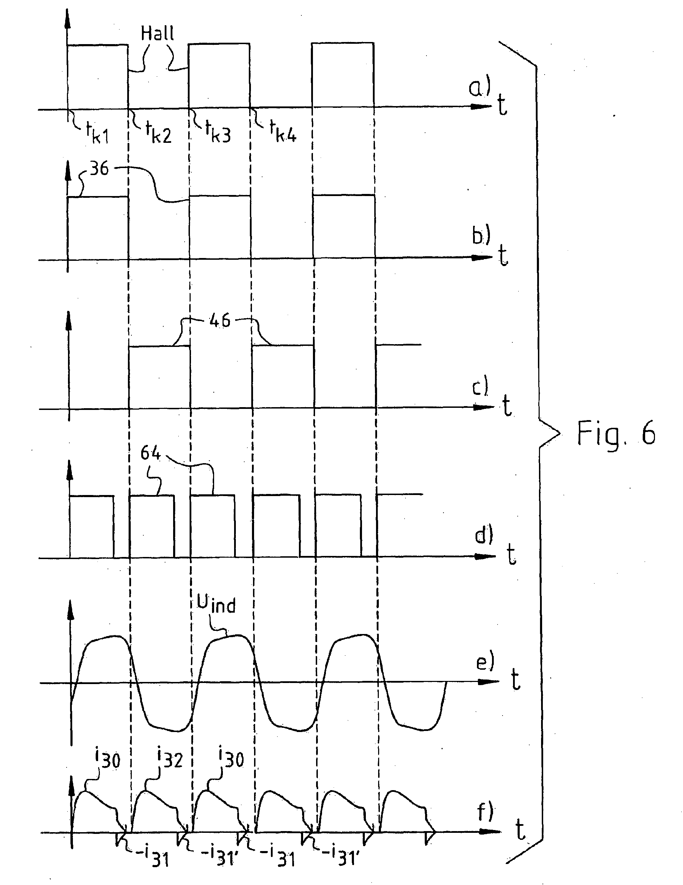

Die eigentliche Umschaltung (Kommutierung) zwischen den Transistoren 34 und 44 oder umgekehrt wird durch das Signal Hall vom Hallsensor 24 bewirkt, wie das in Fig. 6 dargestellt ist. Dabei wird mit Vorteil der Hallsensor 34 um einige Grad in Richtung nach früh verschoben, z.B. um etwa 4° el., um eine sogenannte "Frühzündung" zu erreichen. Alternativ kann dies auch dadurch erreicht werden, dass das Signal Hall elektronisch in seiner Phasenlage verschoben wird, wie das dem Fachmann bekannt ist.

Fig. 6a) zeigt das Signal Hall, aus dem in einfacher Weise ein numerischer Wert für die Drehzahl gewonnen werden kann, z.B. die Zeit, die der Rotor 22 für eine halbe oder - besser - eine komplette Umdrehung benötigt.

Fig. 6b) zeigt das Signal auf der Steuerleitung 36 zum Transistor 34, und Fig. 6c) zeigt das Signal auf der Steuerleitung 46 zum Transistor 44.

Fig. 6d) zeigt das Signal auf der Steuerleitung 64 zum übergeordneten Transistor 60. Man erkennt, dass dieser bereits gesperrt wird, während der Transistor 34 oder der Transistor 44 noch leitend ist.

Fig. 6e) zeigt die induzierte Spannung an einem der Stränge 30 oder 32.

Fig. 6f) zeigt die Ströme i30, i31, i32 in den Strängen 30 und 32. Diese Ströme wurden bei Fig. 4 ausführlich beschrieben.

Um sicher zu stellen, dass die in einem Strang 30 oder 32 gespeicherte Energie rechtzeitig bis zum Zeitpunkt tK1, tK2 etc., also bis zur Änderung des Signals Hall, abgebaut ist, wird an dem Drain-Anschluss D des betreffenden Transistors 34 oder 44 im abgeschalteten Wicklungsstrang die durch den sich drehenden Rotor 22 induzierte Spannung mittels des µC 26 detektiert. Während der Zeit, in der in den Strängen 30, 32 ein Kreisstrom fließt, liegt das Drainpotential nämlich etwa auf Masse.

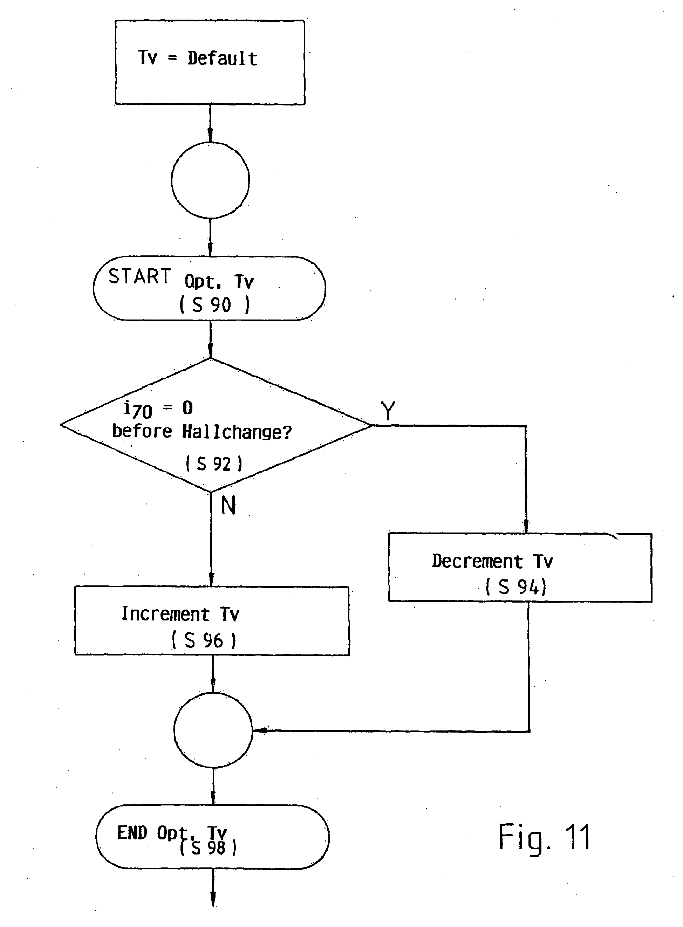

Ist der Kreisstrom zu Null geworden, so kann die induzierte Spannung gemessen und die benötigte Zeitdauer Tv zum Abbau der magnetischen Energie im betreffenden Strang ermittelt werden. So kann man erreichen, dass der übergeordnete Transistor 60 immer nur so früh gesperrt wird, dass die Energie im abzuschaltenden Strang durch Stromkreisen spätestens zum Zeitpunkt tK1, tK2 etc. abgebaut ist. Ebenso kann der µC 26 auch erfassen, wenn der übergeordnete Schalter 60 zu spät gesperrt wurde. Fließt deshalb zum Zeitpunkt tK1, tK2, etc. noch Strom in den Strängen 30, 32, so kann die induzierte Spannung nicht erfasst werden. In diesem Fall ist eine stromlose Kommutierung nicht möglich, und deshalb wird der übergeordnete Schalter 60 beim nächsten Kommutierungsvorgang entsprechend früher geöffnet, um eine kontinuierliche Überlastung der Transistoren 34, 44 zu vermeiden. Eine entsprechende Routine wird nachfolgend bei Fig. 11 erläutert.

Wie beschrieben, wird am Drain-Anschluss des im Augenblick gesperrten Transistors 34 oder 44 die durch die Rotation des Rotors 22 erzeugte induzierte Spannung u_{ind} erfasst, die in Fig. 6e) beispielhaft dargestellt ist. Je mehr man sich dem Kommutierungszeitpunkt tK1, tK2 etc. nähert, um so kleiner wird die induzierte Spannung. Dies erschwert ihre Erfassung, besonders, wenn der Abbau der gespeicherten magnetischen Energie zwecks bestmöglicher Ausnutzung der Wicklung so weit wie möglich in Richtung des Kommutierungszeitpunkts hinausgezögert werden soll. Dies kann, wie bereits erläutert, dadurch verbessert werden, dass der Hallsensor 24 mechanisch in Richtung früh verschoben wird, so dass man eine Frühzündung erhält und die erzeugte induzierte Spannung im Moment ihrer Detektierung größer wird.

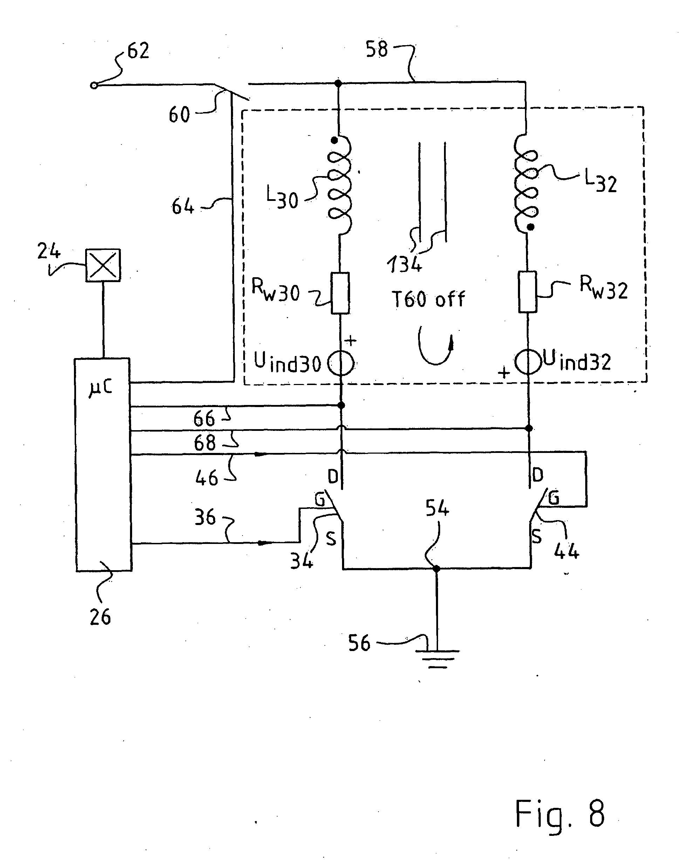

Die induzierte Spannung uind ist auch schon bei niedrigen Drehzahlen gut detektierbar. Dies ergibt sich aus Fig. 8, welche das Ersatzschaltbild des Motors zeigt. Dort liegen die Spannungsquellen u_{ind30} und u_{ind32} beider Wicklungsstränge 30, 32 in Reihe, so dass bei geeigneter Beschaltung das Zweifache der Spannung detektiert werden kann.

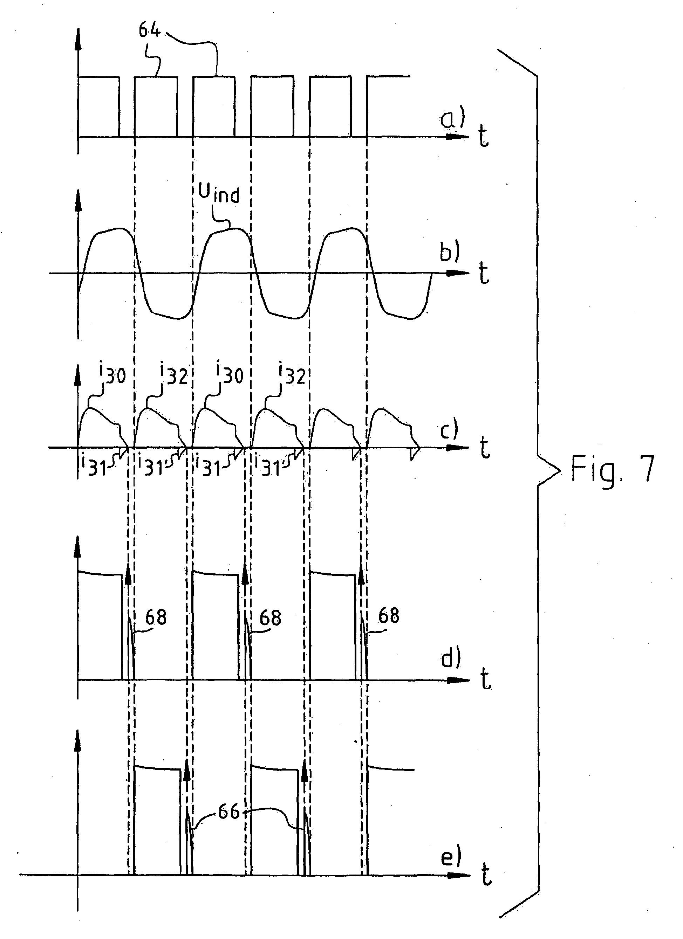

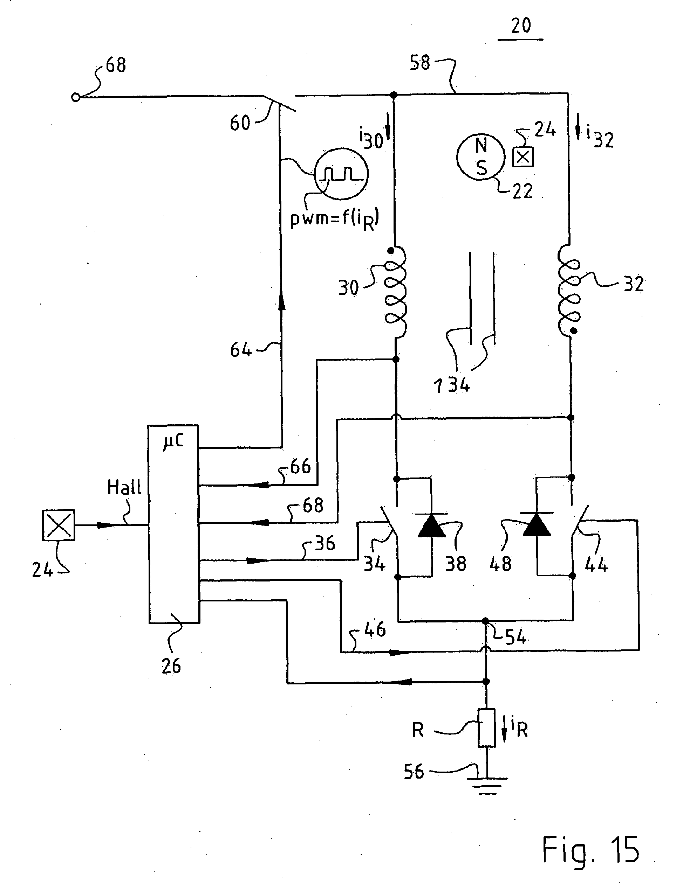

**Fig. 7** zeigt bei a) das Signal auf der Leitung 64, mit dem der übergeordnete Transistor 60 gesteuert wird. Dieses Signal kann zur Strombegrenzung die Form eines PWM-Signals erhalten, wie das in Fig. 15 dargestellt ist.

Fig. 7b) zeigt die induzierte Spannung, die vom permanentmagnetischen Rotor 22 in einem der Stränge 30, 32 induziert wird.

Fig. 7c) zeigt die Ströme i30, i31, i31', i32, die bei Fig. 4 näher erläutert wurden.

Fig. 7d) zeigt die Teile der induzierten Spannung am stromlosen Strang 32, die über die Leitung 68 dem µC 26 zugeführt und von diesem ausgewertet werden. Das Auftreten dieser Impulse zeigt an, dass der Kreisstrom i31 (oder i31') in den Strängen 30 und 32 auf Null abgeklungen ist, so dass eine stromlose Kommutierung zum Zeitpunkt tK1, tK2 etc. möglich ist, wie bei Fig. 4 erläutert.

Fig. 7e) zeigt in analoger Weise die Teile der induzierten Spannung am stromlosen Strang 30, welche über die Leitung 66 dem µC 26 zugeführt und von diesem ausgewertet werden. Für diese gilt das bei Fig. 7d) Gesagte analog.

**Fig. 8** zeigt das Ersatzschaltbild der Stränge 30 und 32. Jeder Strang hat eine Induktivität L30 bzw. L32, einen ohmschen Widerstand Rw30 bzw. Rw32, und schließlich - im Betrieb - eine induzierte Spannung uind30 bzw. uind32. Da diese Spannungen in Reihe geschaltet sind, kann ggf. die doppelte Spannung uind detektiert werden. Zwecks besserer Erfassung der induzierten Spannung ist es nützlich, den Hallsensor 24 etwas in Richtung Frühzündung mechanisch zu verschieben, also entgegen der Drehrichtung, da dann die Spannungsimpulse 66, 68 eine höhere Amplitude haben.

Wenn am µC 26 genügend I/O-Eingänge für eine Signaleingabe vorhanden sind, können die Drain-Anschlüsse D der beiden Transistoren 34, 44 einzeln an einen zugeordneten I/O-Anschluss 70 bzw. 72 des µC 26 angeschlossen werden, vgl. die Fig. 1 und 2.

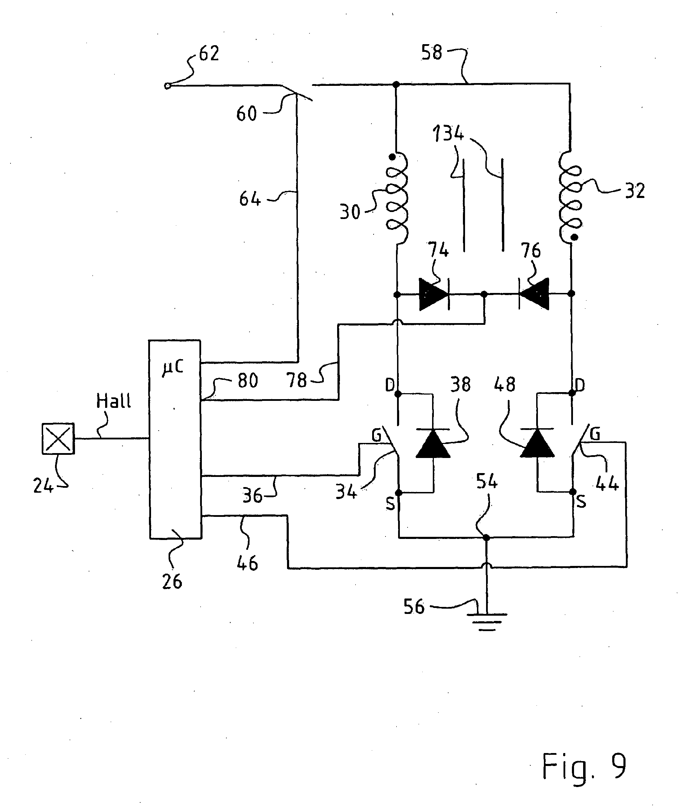

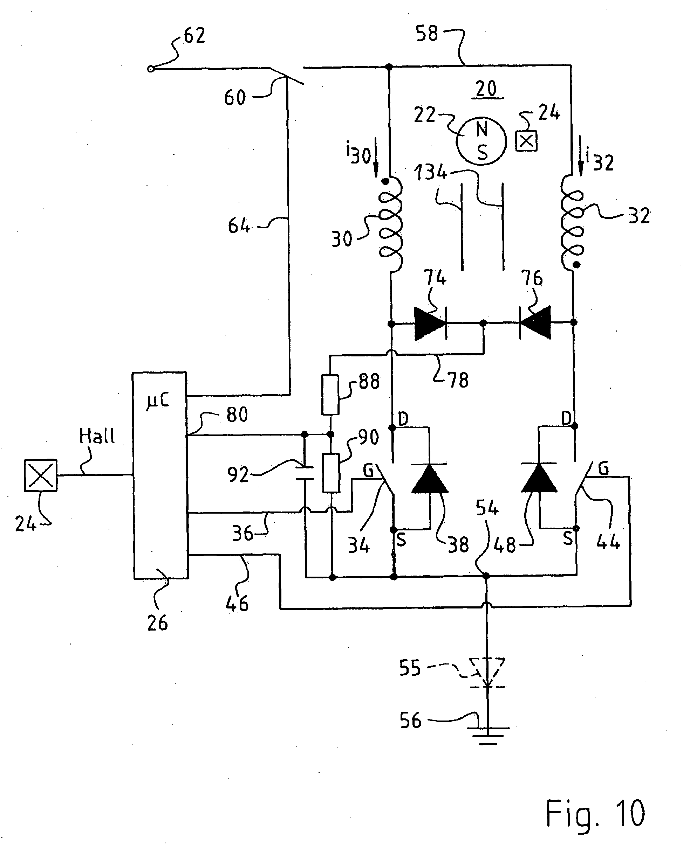

Stehen nur wenige I/O-Anschlüsse zur Verfügung, so können die Drain-Anschlüsse D gemäß **Fig. 9** und **Fig. 10** über zwei Dioden 74, 76 entkoppelt und über eine Leitung 78 an einen einzigen I/O-Anschluss 80 des µC 26 angeschlossen werden.

Eine andere, bevorzugte Möglichkeit ist in Fig. 10 dargestellt. Diese Schaltung stellt eine Verbesserung der Schaltung nach Fig. 9 dar, und in beiden Figuren werden für die gleichen Elemente die gleichen Bezugszeichen verwendet.

Der Anschluss 78 an den Katoden der beiden Dioden 74, 76 ist über einen Widerstand 88 mit dem I/O-Anschluss 80 des µC 26 verbunden, und dieser ist seinerseits über einen Widerstand 90 mit dem Knotenpunkt 54 verbunden. Parallel zum Widerstand 90 kann ein Kondensator 92 vorgesehen werden, um Oszillationen zu unterdrücken

### Bevorzugte Werte

- µC 26: PIC12F629 (Microchip)
- R88: 100 kOhm
- R90: 300 kOhm
- C92: 100 pF

Bei Fig. 2 fließt, wenn der Transistor 60 gesperrt wird, ein Kreisstrom i₃₁ entgegen dem Uhrzeigersinn, und bei Fig. 3 fließt ein Kreisstrom i₃₁' im Uhrzeigersinn. Man muss feststellen können, wann dieser Kreisstrom i₃₁ oder i₃₁' den Wert 0 erreicht hat, weil man dann leistungslos kommutieren kann.

Weil der Transistor 60 gesperrt ist, also kein Strom aus der Stromquelle 63 (Fig. 1) nachgeliefert wird, zirkuliert ein Strom i₃₁ oder i₃₁'. Solange dies der Fall ist, sind die Drains D beider MOSFETs 34 und 44 LOW,

Die Richtung des Stromkreisens richtet sich danach, ob Strang 30 oder Strang 32 Strom führte. Wenn Strang 30 Strom führte (Fig. 2), kreist der Strom entgegen dem Uhrzeigersinn. Dabei werden die Potentiale an den Drains der Transistoren 34, 44 zu Null, was an dem Eingang 80 des µC 26 erfasst werden kann.

Wenn der Kreisstrom zu Null geworden ist, wird in diesem Fall der Drain des Transistors 44, also rechts, durch die Spannung positiv, welche vom rotierenden permanentmagnetischen Rotor 22 in den Statorsträngen induziert wird.

Dies wird über die Diode 76 und den Widerstand 88 zum I/O-Eingang 80 des µC 26 übertragen. Der Widerstand 88 verhindert, dass dieser Eingang übersteuert wird, wenn die induzierte Spannung am rechten Drain zu hoch wird. Dies gilt also für den Zustand HIGH am Eingang 80.

Umgekehrt dient der Widerstand 90 dazu, ein sicheres LOW zu erzeugen, solange ein Kreisstrom fließt.

Der Kondensator 92 ist optional, falls Schwingungen auftreten sollten.

Wenn der Transistor 44 leitend war, wird die induzierte Spannung am Drain des Transistors 34 gemessen.

Für die Spannungsmessung wäre ein µC 26 am vorteilhaftesten, der hierfür einen A/D-Eingang hat, doch sind solche µCs teurer.

Billiger im Vergleich hierzu ist die Verwendung eines Eingangs mit Komparator.

Am billigsten schließlich, und in Fig. 10 dargestellt, ist die Version mit einem normalen I/O-Eingang 80.

Ein solcher Eingang hat bei Verwendung einer TTL-Logik z.B. folgende Werte: LOW: < 0,8 V
HIGH: >= 2,4 V.

Ein solcher I/O-Eingang ist mit einer (nicht dargestellten) internen Schutzdiode geklemmt, um ihn gegen Überspannungen zu schützen. Diese Diode darf nicht überlastet werden, und deshalb wird der hochohmige Widerstand 88 verwendet, der den Strom durch diese Klemmdiode begrenzt.

Der Widerstand 90 hat die Funktion, im Falle LOW, d.h. solange ein Kreisstrom fließt, das Potential am Eingang 80 weiter herunter zu ziehen, also ein sicheres Signal LOW zu erzeugen.

Ein HIGH wird am Eingang 80 detektiert, wenn
a) der Kreisstrom i₃₁ oder i₃₁' auf Null gesunken ist, und
b) der MOSFET auf der betreffenden Seite nicht leitend und auf der gegenüber liegenden Seite leitend ist, denn wenn der MOSFET dort leitend ist, zieht er das Potential an seinem Drain auf Massepotential herunter.

Auf diese Weise kann exakt bestimmt werden, wann der Kreisstrom i₃₁ bzw. i₃₁' zu kreisen aufgehört hat, so dass man kommutieren und den MOSFET 60 korrekt einschalten kann.

Die Zeit Tv (Fig. 4), die beim Start des Motors auf einen Default-Wert gesetzt wird, und an deren Beginn zum Zeitpunkt t64 jeweils das "Vorspiel" zur Kommutierung beginnt, kann durch den µC 26 optimiert werden. Die entsprechende Routine ist in **Fig. 11** dargestellt.

Diese Routine zur Optimierung der Zeit Tv beginnt im Schritt S90 und wird nach jedem Hallwechsel aufgerufen.

In S92 wird geprüft, ob das Ende des Stromkreisens (t₇₀) vor dem Hallwechsel erkannt wurde. Ist dies der Fall, so wird Tv in S94 um eine Schrittweite ΔTv1 reduziert. Ist dies nicht der Fall, so wird Tv in S96 um eine Schrittweite ΔTv2 erhöht, die größer als die Schrittweite Δv1 im Schritt S94 ist. Die Optimierung endet im Schritt S98.

Auf diese Weise stellt sich innerhalb weniger Umdrehungen ein optimaler Wert für Tv auch dann ein, wenn sich z.B. die Motordrehzahl durch äußere Einflüsse geändert hat.

### Probleme am übergeordneten Transistor 60.

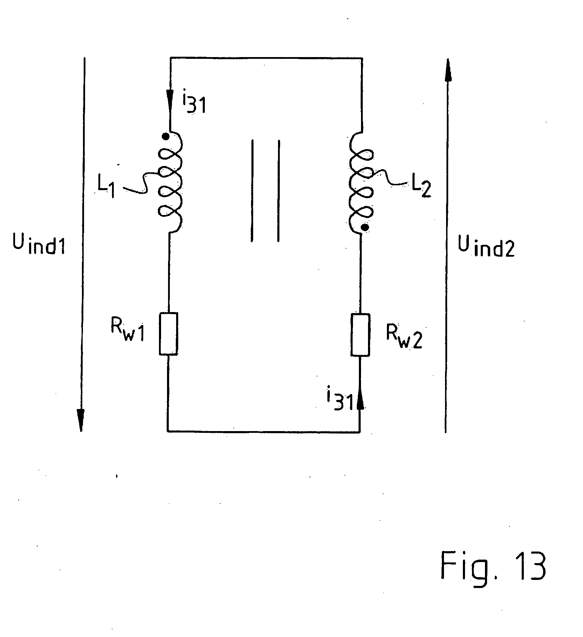

**Fig. 13** zeigt ein Problem, das beim Sperren des übergeordneten Transistors 60 auftritt. Beim Anlauf oder einem Lastwechsel des Motors 20 kann es vorkommen, dass der übergeordnete Transistor 60 zu spät gesperrt wird und deshalb im Kommutierungs¬zeitpunkt tK1, tK2 etc. noch ein Kreisstrom durch die Stränge 30, 32 fließt. In diesem Fall kann nicht stromlos kommutiert werden, und es müssen Schutzmaßnahmen hiergegen ergriffen werden. Diese sind in **Fig. 12** dargestellt und können einzeln oder in Kombination verwendet werden.

### Möglichkeiten zur Drainspannungsbegrenzung an den Transistoren 34 und 44

### Möglichkeit 1

Verwendung eines Zwischenkreiskondensators 110, der die restliche magnetische Energie des abzuschaltenden Wicklungsstranges aufnimmt und dadurch die Spannung am Zwischenkreis 58 begrenzt. Ein typischer Wert für diesen Kondensator 110 bei der Erfindung liegt bei etwa 0,3 µF.

### Möglichkeit 2

Begrenzung der Spannung am Zwischenkreis 58 durch eine Z-Diode 112.

### Möglichkeit 3

Begrenzung der Drainspannungen der Transistoren 34, 44 durch Z-Dioden 114, 116.

### Möglichkeit 4

Begrenzung der Drainspannungen der Transistoren 34, 44 durch langsames Schalten (also durch Begrenzung von di/dt) mittels Serienschaltung eines Kondensators 118 und eines Widerstands 120, welche Serienschaltung zwischen Drain D und Gate G geschaltet wird. Das ist nur für den Transistor 34 dargestellt, wird aber aus Symmetriegründen in gleicher Weise beim Transistor 44 verwendet.

### Möglichkeit 5

Begrenzung der Drainspannungen der Transistoren 34, 44 durch langsames Schalten des betreffenden Transistors (also Begrenzung von di/dt) mittels Serienschaltung einer Z-Diode 124 und eines Widerstands 126. Eine solche Serienschaltung wird in diesem Fall bei beiden Transistoren 34 und 44 zwischen D und G geschaltet.

### Möglichkeit 6

Begrenzung der Drainspannungen der Transistoren 34, 44 durch die Fußpunktdiode 55. Diese verhindert, dass ein Strom von Masse 56 zum Fußpunkt 54 fließt, wenn letzterer negativer als Masse 56 wird. Dies kann geschehen, während ein Kreisstrom, z.B. i31, im Motor 20 fließt.

### Drainspannung am übergeordneten Transistor 60

Wenn der übergeordnete Transistor 60 abgeschaltet wird, ergibt sich ein Kreisstrom i31 (Fig. 2) oder i₃₁' (Fig. 3). Hierbei springt (beim Beispiel der Fig. 2) der Strom im einen Wicklungsstrang 30 auf den halben Wert und nimmt im anderen Wicklungsstrang 32 entsprechend zu, wie das bei Fig. 1 und 2 beschrieben wurde. Diese Stromänderungen erzeugen durch Selbstinduktion entsprechende Spannungen. Diese sind in **Fig. 13** dargestellt, und sind gegensinnig gerichtet.

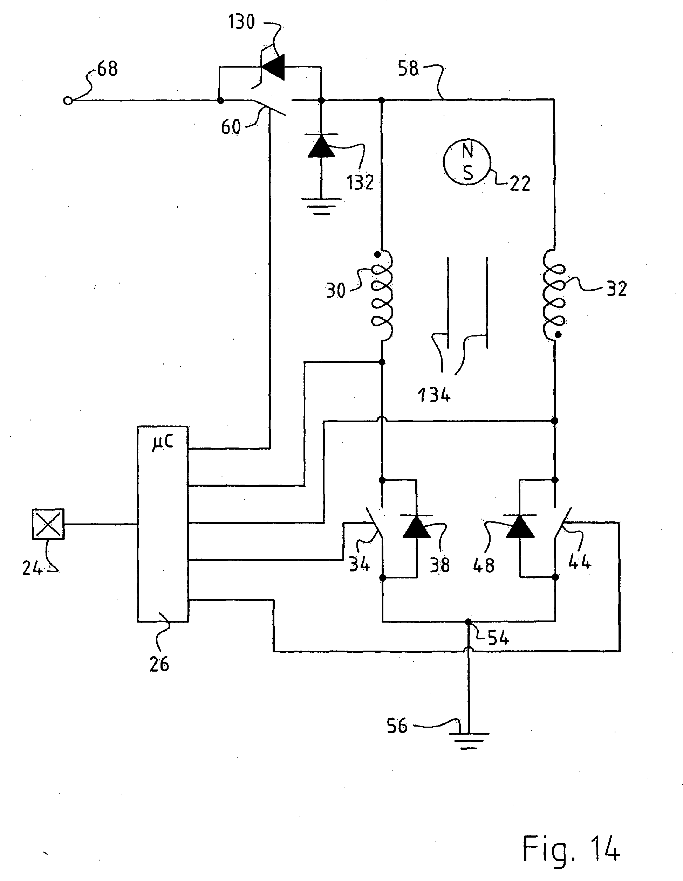

Da die beiden Stränge 30, 32 jedoch nicht streuungsfrei gekoppelt sind, heben sich die beiden Spannungen uind1 und uind2 nicht ganz auf. So entsteht beim Abschalten des MOSFET 60 eine negative Spannungsspitze an dessen Drain D. Diese kann durch Verwendung einer Z-Diode 130 (**Fig**. **14**) begrenzt werden. Ebenso kann einer solchen Spannungsspitze durch Schaffung eines Freilaufkreises mittels einer Diode 132 (Fig. 14) entgegen gewirkt werden.

### Strombegrenzung

Beim Anlauf eines Lüftermotors 20 ist im Stillstand des Motors keine induzierte Spannung vorhanden. Das hat zur Folge, dass die Ströme i30, i32 durch die Stränge 30,32 nur durch deren ohmsche Widerstände Rw (Fig. 8) begrenzt werden. Dies kann sehr hohe Anlaufströme zur Folge haben.

Es ist bekannt, solche Ströme mittels einer Anordnung zur Strombegrenzung zu begrenzen. Hierzu wird ein Strommesswiderstand R im Weg des Motorströms iR platziert, vgl. **Fig. 15**, und ab Erreichen eines vorgegebenen Maximalwerts dieses Stromes wird dem übergeordneten Transistor 60 ein PWM-Signal zugeführt, dessen Tastverhältnis pwm mit zunehmendem Strom iR immer kleiner wird.

Bei Motoren nach dem Stand der Technik werden zur Strombegrenzung die beiden Transistoren 34, 44 gesperrt, wodurch sich jedoch die beschriebenen Probleme mit der Verlustleistung ergeben. Dieses Problem kann vermieden werden, wenn der übergeordnete Transistor 60 bei der Strombegrenzung benutzt wird, um die Energiezufuhr zum Motor 20 zu unterbrechen. Hierbei ergibt sich nämlich ebenfalls der bei Fig. 2 beschriebene kreisende Stromfluss i31 (bzw. i31'), der ein Drehmoment erzeugt. So kann eine Strombegrenzung mit hohem Wirkungsgrad realisiert werden, da anders als bei den bekannten Schaltungen nicht bei jeder Sperrung des Transistors 60 die Energie im Strom führenden Strang 30 oder 32 in Wärme umgewandelt wird. Vielmehr wird diese Energie weiterhin in mechanische Energie umgesetzt und treibt den Rotor 22 an.

Beim Anlauf eines Motors ergeben sich hohe Ströme, und deshalb ist gemäß Formel (1) die magnetische Energie, welche in einem Strang gespeichert wird, während des Anlaufs am größten, weshalb hier eine Strombegrenzung gemäß Fig. 15 enorme Vorteile mit sich bringt.

Fig. 1 in Verbindung mit **Fig. 16** zeigt eine weitere, bevorzugte Ausführungsform der Erfindung. Die Bezugszeichen in Fig. 16 haben die gleiche Bedeutung wie die Bezugszeichen in Fig. 1 bis 4, 6 und 7. Deshalb wird auf diese Figuren + Text verwiesen.

Während bei der Variante nach den Fig. 1 bis 7 die Kommutierung durch das Signal Hall bewirkt wird, das gemäß Fig. 6a) und 6f) am Zeitpunkt t_{K1} den Strom i₃₀ im Strang 30 einschaltet, am Zeitpunkt t_{K2} den Strom i₃₂ im Strang 32, am Zeitpunkt t_{K3} wieder den Strom i₃₀ im Strang 30, etc.. Diese Zeitpunkte entsprechen den Änderungen des Signals Hall (Fig. 6a) von "0" nach "1" oder umgekehrt, wobei der Hallsensor 24 (Fig. 1) etwa in der sogenannten neutralen Zone des Motors angeordnet ist, oder nur um wenige Grad entgegen der Drehrichtung 21 (Fig. 1) aus der neutralen Zone versetzt, z.B. um 4° el.

Bei der Variante nach Fig. 16 ist der Hallsensor 24 um einen größeren Winkel theta_v (Fig. 1 16 und 17) entgegen der Drehrichtung 21 versetzt. Beim Beispiel gemäß Fig. 16a) und 16b) beträgt die Versetzung z.B. etwa 20° el. Naturgemäß hängt die Größe dieses Winkels von verschiedenen Faktoren ab und muss im Einzelfall durch Versuche optimiert werden. Dieser Winkel muss groß genug sein, um die in einem Wicklungsstrang beim Beginn einer Kommutierung gespeicherte magnetische Energie abbauen zu können, bevor der Strom im nächsten Wicklungsstrang eingeschaltet wird.

Wie in Fig. 16 dargestellt, steuert das Signal Hall in diesem Fall nicht die Kommutierung, sondern die Sperrung des übergeordneten Transistors 60, also den Beginn des Stromkreisens, nämlich die Zeitpunkte t64, t64', t64" der Fig. 4.

Wenn sich also zum Zeitpunkt t64 der Fig. 16a) das Signal Hall von "1" nach "0" ändert, wird der Transistor 60 gesperrt, während der im Augenblick leitende Transistor 34 weiterhin leitend bleibt, so dass gemäß Fig. 2 ein Kreisstrom i₃₁ entgegen dem Uhrzeigersinn fließt, bis dieser Strom i₃₁ zu Null geworden ist.

Ebenso ist es, wenn zum Zeitpunkt t64' der Fig. 16a) sich das Signal Hall von "0" nach "1" ändert. Hier wird ebenso der Transistor 60 gesperrt, während der im Augenblick leitende Transistor 44 weiterhin leitend bleibt, so dass gemäß Fig. 3 ein Strom i_{31'} im Uhrzeigersinn fließt, bis dieser Strom i₃₁' zu Null geworden ist.

Wenn dieser Kreisstrom i₃₁ oder i₃₁' den Wert Null erreicht hat, erhält man am Drain D des gesperrten Transistors, also in Fig. 2 des Transistors 44 und in Fig. 3 des Transistors 34, ein Signal, das die Kommutierung bewirkt.

Im Fall der Fig. 2 erhält man ein Signal 68 vom Drain D des gesperrten Transistors 44, welches in Fig. 16g) dargestellt ist, und im Fall der Fig. 3 erhält man ein Signal 66 vom Drain D des gesperrten Transistors 34, welches Signal in Fig. 16h) dargestellt ist. Diese Signale 68 oder 66 bewirken die Kommutierung, also die Einschaltung des Stroms im betreffenden Strang. Das Signal 68 bewirkt die Einschaltung des Stroms i₃₂, also das Einschalten des Transistors 44, und das Signal 66 bewirkt das Einschalten des Stromes i₃₀, also das Einschalten des Transistors 34. Dies ergibt sich aus der Darstellung der Fig. 16.

Sehr vorteilhaft bei dieser Variante ist, dass man nicht unbedingt einen leistungsstarken µC 26 benötigt, sondern dass meist ein ASIC oder ein billiger µC genügt, was die Lösung nach Fig. 16 preiswerter macht.

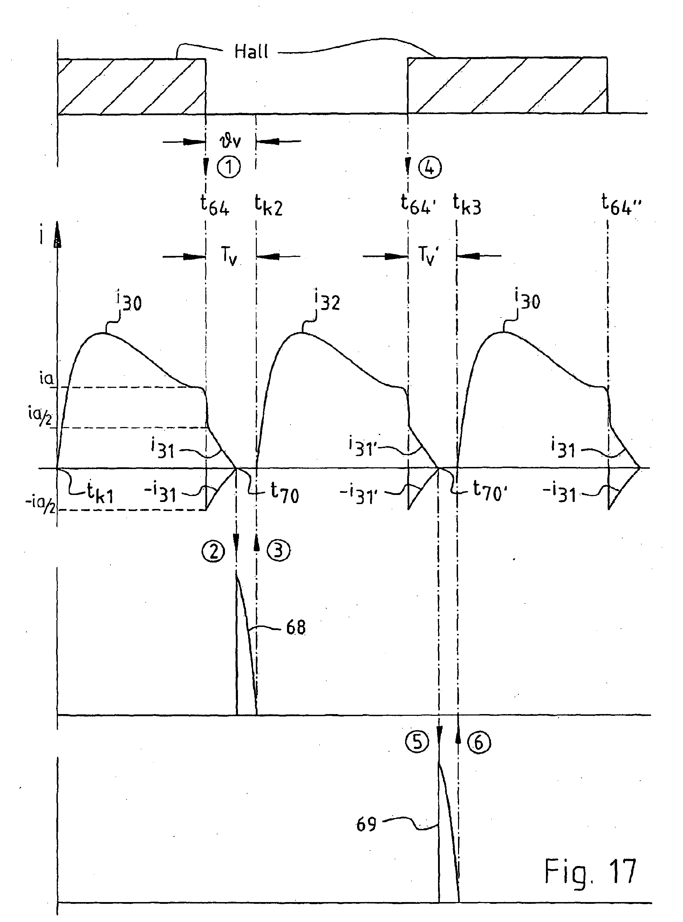

**Fig. 17** zeigt die Variante gemäß Fig. 16 nochmals in einem vereinfachten Schaubild.

Zum Zeitpunkt t64 geht das Signal Hall von "1" nach "0" und bewirkt an der Stelle ① das Sperren des dritten Transistors 60, so dass der Kreisstrom i₃₁ fließt. Dieser wird zum Zeitpunkt t70 zu Null, so dass der Transistor 44 verlustlos gesperrt werden kann, und er bewirkt an der Stelle ② ein Signal 68 am Drain D des nicht leitenden Transistors 44. Dieses Signal 68 bewirkt an der Stelle ③, also zum Zeitpunkt t_{K2}, die Kommutierung, also das Einschalten der (bis dahin gesperrten) Transistoren 44 und 60, wie in Fig. 3 dargestellt, so dass der Strom j₃₂ durch den Strang 32 fließt.

Zum Zeitpunkt t64' geht das Signal Hall von "0" nach "1 ". Dadurch wird an der Stelle ④ der dritte Transistor 60 gesperrt, und es fließt gemäß Fig. 3 ein Kreisstrom i₃₁', der zum Zeitpunkt t70' zu Null wird, so dass dann der Transistor 64 verlustlos gesperrt werden kann.

Dadurch entsteht an der Stelle ⑤ am Drain D des nichtleitenden Transistors 34 das Signal 69, und dieses bewirkt an der Stelle ⑥ die Kommutierung, also das Einschalten der (bis dahin gesperrten) Transistoren 34 und 60.

Die Vorgänge wiederholen sich dann fortlaufend in der beschriebenen Weise. Vorteilhaft ist, dass durch die Ausnützung des Signals Hall für die Einleitung des Kommutierungsvorgangs besondere Rechenvorgänge eingespart werden können, die sonst den Zeitpunkt t64 anhand verschiedener Daten berechnen müssten.

Durch die Erfindung in ihren verschiedenen Varianten ergeben sich vor allem folgende Vorteile:
- Die Verluste und damit die Wärmeentwicklung in den Endstufentransistoren 34, 44 werden reduziert, weil die beim Beginn einer Kommutierung in einem Wicklungsstrang 30 oder 32 vorhandene magnetische Energie weitgehend in mechanische Energie umgesetzt wird und den betreffenden Endstufentransistor nicht erwärmt.
- Folglich kann man durch die Erfindung elektronische Baugruppe kleinerer Leistungsfähigkeit verwenden, was zu einer Platz- und Kostenersparnis führt. Z.B. kann man Transistoren mit etwas geringerer Leistung und folglich geringerer Baugröße verwenden.
- Da der Zwischenkreis-Kondensator 110 (Fig. 12) kleiner sein kann als bei den bekannten Lösungen, oder manchmal ganz entfallen kann, wird der Motor kleiner, und es ergibt sich eine höhere Lebensdauer des Motors, wie vorstehend erläutert.
- Der Wirkungsgrad des Motors erhöht sich.
- Bei Antriebssystemen, wie sie z.B. für Kompaktlüfter verwendet werden, ergibt sich eine Erhöhung der Leistungsdichte und damit eine erhöhte Lüfterleistung für eine bestimmte Baugröße.
- Es ist möglich, eine Strombegrenzung vorzusehen, was besonders die Stromspitzen beim Anlauf solcher Motoren reduziert.

Naturgemäß sind im Rahmen der vorliegenden Erfindung vielfache Abwandlungen und Modifikationen möglich.

## Patentansprüche

1. Verfahren zum Betrieb eines elektronisch kommutierten Motors (20) an einem Gleichstromnetz, welcher Motor aufweist:
Einen permanentmagnetischen Rotor (22);
eine erste Serienschaltung (40), in welcher ein erster Statorwicklungsstrang (30) mit einem ersten steuerbaren Halbleiterschalter (34) in Reihe geschaltet ist;
eine zweite Serienschaltung (50), in welcher ein zweiter Statorwicklungsstrang (32) mit einem zweiten steuerbaren Halbleiterschalter (44) in Reihe geschaltet ist;
welche beiden Serienschaltungen (40, 50) zu einer Parallelschaltung (52) parallel geschaltet sind;
wobei die beiden Statorwicklungsstränge (30, 32) magnetisch gekoppelt (134) sind;
einen in einer Zuleitung zu dieser Parallelschaltung (52) angeordneten dritten steuerbaren Halbleiterschalter (60) zur Steuerung der Energiezufuhr zum Motor (20) aus dem Gleichstromnetz;
mit folgenden Schritten:
Beeinflusst von der Drehstellung des Rotors wird alternierend die Möglichkeit der Energiezufuhr aus dem Gleichstromnetz zum einen Wicklungsstrang während einer potentiellen Bestromungsphase aktiviert, wobei entweder der dritte steuerbare Halbleiterschalter (60) und der erste steuerbare Halbleiterschalter (34) oder aber der dritte steuerbare Halbleiterschalter (60) und der zweite steuerbare Halbleiterschalter (44) leitend gesteuert sind,
und die Möglichkeit der Energiezufuhr aus dem Gleichstromnetz zum anderen Wicklungsstrang wird während dieser potentiellen Bestromungsphase deaktiviert,
indem entweder der zweite steuerbare Halbleiterschalter (44) oder der erste steuerbare Halbleiterschalter (34) gesperrt sind,
wobei die potentielle Bestromungsphase des einen Wicklungsstranges jeweils durch einen Kommutierungszeitpunkt (tk1, tk2) zeitlich von der potentiellen Bestromungsphase des anderen Wicklungsstranges separiert ist;
während einer potentiellen Bestromungsphase wird an einem Umschaltzeitpunkt (Fig. 4: t64) zwecks Einleitung eines Kommutierungsvorgangs der dritte steuerbare Halbleiterschalter (60) aus einem leitenden in einen nicht leitenden Zustand umgeschaltet, um die Energiezufuhr aus dem Gleichstromnetz zu unterbrechen;
der im Umschaltzeitpunkt (t64) leitende erste oder zweite Halbleiterschalter (34, 44) wird im leitenden Zustand gehalten, so dass in der Parallelschaltung (52) nach dem Sperren des dritten steuerbaren Halbleiterschalters (60) ein Kreisstrom (i31) fließt, der, wenn der dritte steuerbare Halbleiterschalter (60) so früh gesperrt wird, dass die Energie im abzuschaltenden Strang durch Stromkreisen spätestens zum Kommutierungszeitpunkt (tk1, tk2) abgebaut ist, im Motor ein antreibendes Drehmoment erzeugt;
dieser Kreisstrom (Fig. 2: i31; Fig. 3: i31') wird überwacht;
bei Erreichen eines vorgegebenen niedrigen Absolutwertes dieses Kreisstroms (|i31|) wird der im Augenblick leitende erste und/oder zweite Halbleiterschalter (34, 44) gesperrt;
je nach Drehstellung des Rotors (22) wird als Teil des Kommutierungsvorgangs die potentielle Bestromungsphase des einen Stranges deaktiviert und die potentielle Bestromungsphase des anderen Stranges aktiviert, und der dritte Halbleiterschalter (60) wird wieder eingeschaltet, um die Möglichkeit einer Energiezufuhr zum Motor (20) aus dem Gleichstromnetz wieder zu aktivieren.

2. Elektronisch kommutierter Motor (20) zum Betrieb an einer Gleichstromquelle, welcher Motor aufweist:
Anschlüsse (56, 62) zum Anschluss an eine Gleichstromquelle (63);
einen permanentmagnetischen Rotor (22);
eine erste Serienschaltung (40), in welcher ein erster Statorwicklungsstrang (30) mit einem ersten steuerbaren Halbleiterschalter (34) in Reihe geschaltet ist;
eine zweite Serienschaltung (50), in welcher ein zweiter Statorwicklungsstrang (32) mit einem zweiten steuerbaren Halbleiterschalter (44) in Reihe geschaltet ist; welche beiden Serienschaltungen (40, 50) zu einer Parallelschaltung (52) parallel geschaltet sind, wobei die beiden Statorwicklungsstränge (30, 32) magnetisch gekoppelt (134) sind;
einen in einer Zuleitung zu der Parallelschaltung (52) angeordneten dritten steuerbaren Halbleiterschalter (60) zur Steuerung der Energiezufuhr zum Motor (20) aus der Gleichstromquelle (63);
und mit einer Steuervorrichtung, welche dazu ausgebildet ist, im Betrieb folgende Schritte auszuführen:
Beeinflusst von der Drehstellung des Rotors (22) wird alternierend die Möglichkeit der Energiezufuhr aus der Gleichstromquelle (63) zum einen Wicklungsstrang während einer potenziellen Bestromungsphase aktiviert, wobei entweder der dritte steuerbare Halbleiterschalter (60) und der erste steuerbare Halbleiterschalter (34), oder aber der dritte steuerbare Halbleiterschalter (60) und der zweite steuerbare Halbleiterschalter (44) leitend gesteuert sind, und die Möglichkeit der Energiezufuhr aus der Gleichstromquelle (63) zum anderen Wicklungsstrang wird während dieser potenziellen Bestromungsphase deaktiviert, indem entweder der zweite steuerbare Halbleiterschalter (44) oder der erste steuerbare Halbleiterschalter (34) gesperrt sind;
wobei die potenzielle Bestromungsphase des einen Wicklungsstranges jeweils durch einen Kommutierungszeitpunkt (tk1, tk2), von der potenziellen Bestromungsphase des anderen Wicklungsstranges separiert ist;
während einer potenziellen Bestromungsphase wird an einem Umschaltzeitpunkt (Fig. 4: t64) zwecks Einleitung eines Kommutierungsvorganges der dritte steuerbare Halbleiterschalter (60) gesperrt, um die Energiezufuhr aus der Gleichstromquelle (63) zu unterbrechen;
der im Umschaltzeitpunkt (t64) leitende erste und / oder zweite Halbleiterschalter (34, 44) wird im leitenden Zustand gehalten, so dass im Betrieb in der Parallelschaltung (52) nach dem Sperren des dritten steuerbaren Halbleiterschalters (60) ein Kreisstrom (i31; i31') fließt, der, wenn der dritte steuerbare Halbleiterschalter (60) so früh gesperrt wird, dass die Energie im abzuschaltenden Strang durch Stromkreisen spätestens zum Kommutierungszeitpunkt (tk1, tk2) abgebaut ist, im Motor ein antreibendes Drehmoment erzeugt;
dieser Kreisstrom (Fig. 2: i31; Fig. 3: i31') wird überwacht;
bei Erreichen eines vorgegebenen niedrigen Absolutwertes dieses Kreisstroms (|i31|) wird der im Augenblick leitende erste und / oder zweite Halbleiterschalter (34, 44) gesperrt;
je nach Drehstellung des Rotors (22) wird als Teil des Kommutierungsvorgangs die potenzielle Bestromungsphase des einen Stranges deaktiviert und die potenzielle Bestromungsphase des anderen Stranges wird aktiviert;
der dritte Halbleiterschalter (60) wird wieder eingeschaltet.

3. Motor nach Anspruch 2, bei welchem zum ersten und zum zweiten steuerbaren Halbleiterschalter (34, 44) jeweils eine Freilaufdiode (38, 48) antiparallel geschaltet ist.

4. Motor nach Anspruch 2 oder 3, bei welchem mindestens einer der steuerbaren Halbleiterschalter (34, 44, 60) als Feldeffekttransistor ausgebildet ist.

5. Motor nach einem der Ansprüche 2 bis 4, bei welchem ein Wicklungsstrang (30) mit einem Anschluss (D) des ihm zugeordneten steuerbaren Halbleiterschalters (34) verbunden ist,
und der andere Anschluss (S) dieses Halbleiterschalters (34) mit dem entsprechenden anderen Anschluss (S) des mit dem anderen Wicklungsstrang (32) verbundenen steuerbaren Halbleiterschalter (44) durch eine elektrische Verbindung (54) verbunden ist,
und in der Zuleitung zu dieser elektrischen Verbindung (54) ein Sperrelement (55) vorgesehen ist, welches nur einen unidirektionalen Strom ermöglicht.

6. Motor nach einem der Ansprüche 2 bis 5, bei welchem die Wicklungsstränge (30, 32) durch bifilares Wickeln magnetisch gekoppelt (134) sind.

7. Motor nach einem der Ansprüche 2 bis 6, bei welchem zu dem in der Zuleitung zur Parallelschaltung (52) angeordneten Halbleiterschalter (60) eine Diode (61; 130) insbesondere eine Zenerdiode, antiparallel geschaltet ist.

8. Motor nach einem der Ansprüche 2 bis 7, bei welchem der in der Zuleitung zur Parallelschaltung (52) angeordnete steuerbare Halbleiterschalter (60) an seinem mit den Wicklungssträngen (30, 32) verbundenen Ausgang (58) mit der einen Elektrode einer Diode (112; 132) verbunden ist, deren andere Elektrode mit einem anderen Anschluss (56) des Motors (20) verbunden ist, um so bei Schaltvorgängen dieses Halbleiterschalters (60) Spannungsspitzen zu begrenzen, welche im Betrieb an dessen mit der Parallelschaltung (52) verbundenem Ausgang (58) auftreten.

9. Motor nach einem der Ansprüche 2 bis 8, welcher in einem Kompaktlüfter angeordnet ist und zu dessen Antrieb dient.

10. Motor nach einem der Ansprüche 2 bis 9, bei welchem zur Erfassung eines vorgegebenen niedrigen Wertes des Kreisstroms (i31) eine Vorrichtung (26) zur Überwachung des Potenzials (Fig. 6: 66, 68) an wenigstens einem der Anschlüsse (D) von erstem und / oder zweitem steuerbarem Halbleiterschalter (34, 44) vorgesehen ist.

11. Motor nach Anspruch 10, bei welchem die Vorrichtung (26) dazu ausgebildet ist, zumindest in einem vorgegebenen Drehstellungsbereich des Rotors (22) das Auftreten einer Spannung (Fig. 6: 66, 68) zu erfassen, die vom rotierenden Rotor (22) in einem zugeordneten Statorwicklungsstrang (30, 32) induziert wird.

12. Motor nach Anspruch 11, bei welchem die Vorrichtung (26) dazu ausgebildet ist, die Größe der Amplitude dieser induzierten Spannung zu erfassen.

13. Motor nach Anspruch 11, bei welchem die Vorrichtung (26) dazu ausgebildet ist, dann, wenn die induzierte Spannung nicht messbar ist, den Zeitpunkt (Fig. 4: t64) der Abschaltung des dritten steuerbaren Halbleiterschalters in Richtung früh zu verschieben (Fig. 9: S94)

14. Motor nach Anspruch 12, bei welchem die Vorrichtung (26) dazu ausgebildet ist, dann, wenn die Größe der Amplitude der induzierten Spannung einen vorgegebenen Wert (A) überschreitet, den Zeitpunkt (Fig. 4: t64) der Abschaltung des dritten steuerbaren Halbleiterschalters in Richtung spät zu verschieben (Fig. 9: S98).

15. Motor nach einem der Ansprüche 2 bis 14, bei welchem ein Rotorstellungssensor (24; 24') vorgesehen ist, dessen Ausgangssignal (Hall) der Steuervorrichtung (26) zuführbar ist, und der so angeordnet ist, dass sein Ausgangssignal die Steuerung des Beginns des Stromes (i30, i32) in einem einzuschaltenden Statorwicklungsstrang (30, 32) ermöglicht.

16. Motor nach Anspruch 15, bei welchem der Rotorstellungssensor (24') so angeordnet ist, dass sein Signal die Steuerung des Umschaltzeitpunkts (Fig. 4: t64) ermöglicht, an welchem zwecks Einleitung eines Kommutierungsvorgangs der dritte steuerbare Halbleiterschalter (60) gesperrt wird.

## Claims

1. Method for operating an electronically commutated motor (20) on a DC power network, which motor comprises:
a permanent-magnet rotor (22);
a first series circuit (40) in which a first stator winding strand (30) is connected in series with a first controllable semiconductor switch (34);
a second series circuit (50) in which a second stator winding strand (32) is connected in series with a second controllable semiconductor switch (44);
which two series circuits (40, 50) are connected in parallel to form a parallel circuit (52);
wherein the two stator winding strands (30, 32) are magnetically coupled (134);
a third controllable semiconductor switch (60), arranged in a supply lead to said parallel circuit (52), for controlling the energy supply to the motor (20) from the DC power network;
having the following steps:
alternately, influenced by the rotational position of the rotor, the possibility of the energy supply from the DC power network to one winding strand during a potential current-flow phase is activated, wherein either the third controllable semiconductor switch (60) and the first controllable semiconductor switch (34) or else the third controllable semiconductor switch (60) and the second controllable semiconductor switch (44) are controlled to be conductive,
and the possibility of the energy supply from the DC power network to the other winding strand during said potential current-flow phase is deactivated, by either blocking the second controllable semiconductor switch (44) or the first controllable semiconductor switch (34),
wherein the potential current-flow phase of the one winding strand is separated in time, by a respective commutation instant (tk1, tk2), from the potential current-flow phase of the other winding strand;
during a potential current-flow phase, at a switchover instant (Fig. 4: t64) the third controllable semiconductor switch (60) is switched over, for the purpose of initiating a commutation procedure, from a conductive into a non-conductive state, in order to interrupt the energy supply from the DC power network;
the first or second semiconductor switch (34, 44) conductive at the switchover instant (t64) is maintained in the conductive state, so that, after blockage of the third controllable semiconductor switch (60), a circulating current (i31) flows in the parallel circuit (52) which generates a driving torque in the motor if the third controllable semiconductor switch (60) is blocked early enough that the energy due to the circulating currents in the strand to be switched off has dissipated, at the latest, at the commutation instant (tk1, tk2);
said circulating current (Fig. 2: i31; Fig. 3; i31') is monitored;
when said circulating current (|i31|) reaches a predetermined low absolute value (|i31|), the first and/or second semiconductor switch (34, 44) conductive at that moment is blocked;
depending on the rotational position of the rotor (22), as part of the commutation procedure, the potential current-flow phase of the one strand is deactivated and the potential current-flow phase of the other strand is activated, and the third semiconductor switch (60) is switched on again, in order to reactivate the possibility of an energy supply to the motor (20) from the DC power network.

2. Electronically commutated motor (20) for operation on a DC power source, which motor comprises:
terminals (56, 62) for connection to a DC power source (63);
a permanent-magnet rotor (22);
a first series circuit (40) in which a first stator winding strand (30) is connected in series with a first controllable semiconductor switch (34);
a second series circuit (50) in which a second stator winding strand (32) is connected in series with a second controllable semiconductor switch (44);
which two series circuits (40, 50) are connected in parallel to form a parallel circuit (52), wherein the two stator winding strands (30, 32) are magnetically coupled (134);
a third controllable semiconductor switch (60), arranged in a supply lead to the parallel circuit (52), for controlling the energy supply to the motor (20) from the DC power source (63);
and having a control apparatus which is implemented to carry out, in operation, the following steps:
alternately, influenced by the rotational position of the rotor (22), the possibility of the energy supply from the DC power network to one winding strand during a potential current-flow phase is activated, wherein either the third controllable semiconductor switch (60) and the first controllable semiconductor switch (34) or else the third controllable semiconductor switch (60) and the second controllable semiconductor switch (44) are controlled to be conductive, and the possibility of the energy supply from the DC power source (63) to the other winding strand during said potential current-flow phase is deactivated, by either blocking the second controllable semiconductor switch (44) or the first controllable semiconductor switch (34);
wherein the potential current-flow phase of the one winding strand is separated, by a respective commutation instant (tk1, tk2), from the potential current-flow phase of the other winding strand;
during a potential current-flow phase, at a switchover instant (Fig. 4: t64) the third controllable semiconductor switch (60) is blocked, for the purpose of initiating a commutation procedure, in order to interrupt the energy supply from the DC power source (63);
the first and/or second semiconductor switch (34, 44) conductive at the switchover instant (t64) is maintained in the conductive state, so that, after blockage of the third controllable semiconductor switch (60), a circulating current (i31; i31') flows in the parallel circuit (52) which generates a driving torque in the motor if the third controllable semiconductor switch (60) is blocked early enough that the energy due to the circulating currents in the strand to be switched off has dissipated, at the latest, at the commutation instant (tk1, tk2);
said circulating current (Fig. 2: i31; Fig. 3; i31') is monitored;
when said circulating current (|i31|) reaches a predetermined low absolute value (|i31|), the first and/or second semiconductor switch (34, 44) conductive at that moment is blocked;
depending on the rotational position of the rotor (22), as part of the commutation procedure, the potential current-flow phase of the one strand is deactivated and the potential current-flow phase of the other strand is activated;
the third semiconductor switch (60) is switched on again.

3. Motor according to Claim 2, wherein a respective recovery diode (38, 48) is connected antiparallel with the first and the second controllable semiconductor switch (34, 44).

4. Motor according to Claim 2 or 3, wherein at least one of the controllable semiconductor switches (34, 44, 60) is implemented as a field effect transistor.

5. Motor according to one of Claims 2 to 4, wherein
one winding strand (30) is connected to a terminal (D) of the controllable semiconductor switch (34) associated therewith,
and the other terminal (S) of said semiconductor switch (34) is connected by an electrical connection (54) to the corresponding other terminal (S) of the controllable semiconductor switch (44) connected to the other winding strand (32),
and a blocking element (55) which enables only a unidirectional current is provided in the supply lead to said electrical connection (54).

6. Motor according to one of Claims 2 to 5, wherein the winding strands (30, 32) are magnetically coupled (134), due to a bifilar winding.

7. Motor according to one of Claims 2 to 6, wherein
a diode (61; 130), in particular a Zener diode, is connected antiparallel with the semiconductor switch (60) arranged in the supply lead to the parallel circuit (52).

8. Motor according to one of Claims 2 to 7, wherein the semiconductor switch (60), arranged in the supply lead to the parallel circuit (52), is connected, at its output (58) connected to the winding strands (30, 32), to one electrode of a diode (112; 132), whose other electrode is connected to another terminal (56) of the motor (20), in order thereby to limit voltage spikes that occur, in operation, upon switching procedures of said semiconductor switch (60), at the latter's output (58) connected to the parallel circuit (52).

9. Motor according to one of Claims 2 to 8, which is arranged in a compact fan and serves for driving the latter.

10. Motor according to one of Claims 2 to 9, wherein, in order to sense a predetermined low value of the circulating current (i31), an apparatus (26) for monitoring the potential (Fig. 6: 66, 68) at at least one of the terminals (D) of the first and/or second controllable semiconductor switch (34, 44) is provided.

11. Motor according to Claim 10, wherein the apparatus (26) is implemented to sense, at least in a predetermined rotational position range of the rotor (22), the occurrence of a voltage (Fig. 6; 66, 68) induced by the rotating rotor (22) in an associated stator winding strand (30, 32).

12. Motor according to Claim 11, wherein the apparatus (26) is implemented to sense the magnitude of the amplitude of said induced voltage.

13. Motor according to Claim 11, wherein the apparatus (26) is implemented, if the induced voltage is not measurable, to displace in the advance direction (Fig. 9: S94) the instant (Fig. 4: t64) at which the third controllable semiconductor switch is switched off.

14. Motor according to Claim 12, wherein the apparatus (26) is implemented, if the amplitude of the induced voltage exceeds a predetermined value (A), to displace in the retard direction (Fig. 9: S98) the instant (Fig. 4: t64) at which the third controllable semiconductor switch is switched off.

15. Motor according to one of Claims 2 to 14, wherein a rotor position sensor (24; 24') is provided, the output signal (Hall) of which can be supplied to the control apparatus (26), and which is arranged so that its output signal enables control of the beginning of the current (i30, i32) in a stator winding strand (30, 32) that is to be switched on.

16. Motor according to Claim 15, wherein the rotor position sensor (24') is arranged so that its signal enables control of the switchover instant (Fig. 4: t64) at which the third controllable semiconductor switch (60) is blocked for the purpose of initiating a commutation procedure.

## Revendications

1. Procédé de fonctionnement d'un moteur à commutation électronique (20) sur un réseau à courant continu, lequel moteur présente :
un rotor à aimant permanent (22) ;
un premier circuit série (40) dans lequel une première branche d'enroulement statorique (30) est branchée en série avec un premier commutateur à semi-conducteurs commandable (34) ;
un deuxième circuit série (50) dans lequel une deuxième branche d'enroulement statorique (32) est branchée en série avec un deuxième commutateur à semi-conducteurs commandable (44) ;
les deux circuits série (40, 50) étant branchés en parallèle pour former un circuit parallèle (52);
les deux branches d'enroulement statorique (30, 32) étant couplées magnétiquement (134) ;
un troisième commutateur à semi-conducteurs commandable (60) pour commander l'amenée d'énergie au moteur (20) à partir du réseau à courant continu, disposé dans une ligne d'alimentation de ce circuit parallèle (52) ;
présentant les étapes suivantes :
sous l'influence de la position de rotation du rotor, la possibilité d'amenée d'énergie à une branche d'enroulement à partir du réseau à courant continu est activée en alternance pendant une phase d'alimentation potentielle, soit le troisième commutateur à semi-conducteurs commandable (60) et le premier commutateur à semi-conducteurs commandable (34), soit le troisième commutateur à semi-conducteurs commandable (60) et le deuxième commutateur à semi-conducteurs commandable (44) étant commandés à l'état passant,
et la possibilité d'amenée d'énergie à l'autre branche d'enroulement à partir du réseau à courant continu est désactivée pendant cette phase d'alimentation potentielle, soit le deuxième commutateur à semi-conducteurs commandable (44), soit le premier commutateur à semi-conducteurs commandable (34) étant bloqué, la phase d'alimentation potentielle d'une branche d'enroulement étant chaque fois séparée dans le temps de la phase d'alimentation potentielle de l'autre branche d'enroulement par un instant de commutation (tk1, tk2) ;
pendant une phase d'alimentation potentielle, à un instant de commutation (Fig. 4 : t64), le troisième commutateur à semi-conducteurs commandable (60) est passé d'un état conducteur dans un état non conducteur pour déclencher une opération de commutation afin d'interrompre l'amenée d'énergie à partir du réseau à courant continu ;
le premier ou le deuxième commutateur à semi-conducteurs (34, 44) conducteur à l'instant de commutation (t64) est maintenu dans l'état conducteur, de sorte qu'un courant circulaire (i31) circule dans le circuit parallèle (52) après le blocage du troisième commutateur à semi-conducteurs commandable (60), lequel génère un couple d'entraînement dans le moteur si le troisième commutateur à semi-conducteurs commandable (60) est bloqué assez tôt pour que l'énergie dans la branche à couper soit dissipée par circulation de courant au plus tard à l'instant de commutation (tk1, tk2) ;
ce courant circulaire (Fig. 2 : i31 ; Fig. 3 : i31') est surveillé ;
lorsque ce courant circulaire atteint une valeur absolue faible prédéfinie (|i31|), le premier et/ou le deuxième commutateur à semi-conducteurs (34, 44) momentanément conducteur est bloqué ;
en fonction de la position de rotation du rotor (22), une partie de l'opération de commutation consiste à désactiver la phase d'alimentation potentielle d'une branche et à activer la phase d'alimentation potentielle de l'autre branche, puis à rendre de nouveau passant le troisième commutateur à semi-conducteurs (60) pour réactiver la possibilité d'une amenée d'énergie au moteur (20) à partir du réseau à courant continu.

2. Moteur à commutation électronique (20) destiné à fonctionner sur une source de courant continu, lequel moteur présente :
des bornes (56, 62) pour le raccordement à une source de courant continu (63) ;
un rotor à aimant permanent (22) ;
un premier circuit série (40) dans lequel une première branche d'enroulement statorique (30) est branchée en série avec un premier commutateur à semi-conducteurs commandable (34) ;
un deuxième circuit série (50) dans lequel une deuxième branche d'enroulement statorique (32) est branchée en série avec un deuxième commutateur à semi-conducteurs commandable (44) ;
les deux circuits série (40, 50) étant branchés en parallèle pour former un circuit parallèle (52), les deux branches d'enroulement statorique (30, 32) étant couplées magnétiquement (134) ;
un troisième commutateur à semi-conducteurs commandable (60) pour commander l'amenée d'énergie au moteur (20) à partir du réseau à courant continu, disposé dans une ligne d'alimentation du circuit parallèle (52) ;
et un dispositif de commande qui est conçu pour exécuter les étapes suivantes en fonctionnement :
sous l'influence de la position de rotation du rotor (22), la possibilité d'amenée d'énergie à une branche d'enroulement à partir de la source de courant continu (63) est activée en alternance pendant une phase d'alimentation potentielle, soit le troisième commutateur à semi-conducteurs commandable (60) et le premier commutateur à semi-conducteurs commandable (34), soit le troisième commutateur à semi-conducteurs commandable (60) et le deuxième commutateur à semi-conducteurs commandable (44) étant commandés à l'état passant, et la possibilité d'amenée d'énergie à l'autre branche d'enroulement à partir de la source de courant continu (63) est désactivée pendant cette phase d'alimentation potentielle, soit le deuxième commutateur à semi-conducteurs commandable (44), soit le premier commutateur à semi-conducteurs commandable (34) étant bloqué, la phase d'alimentation potentielle d'une branche d'enroulement étant chaque fois séparée dans le temps de la phase d'alimentation potentielle de l'autre branche d'enroulement par un instant de commutation (tk1, tk2) ;
pendant une phase d'alimentation potentielle, à un instant de commutation (Fig. 4 : t64), le troisième commutateur à semi-conducteurs commandable (60) est bloqué pour déclencher une opération de commutation afin d'interrompre l'amenée d'énergie à partir de la source de courant continu (63) ;
le premier et/ou le deuxième commutateur à semi-conducteurs (34, 44) conducteur à l'instant de commutation (t64) est/sont maintenu(s) dans l'état conducteur, de sorte qu'en fonctionnement un courant circulaire (i31 ; i31') circule dans le circuit parallèle (52) après le blocage du troisième commutateur à semi-conducteurs commandable (60), lequel génère un couple d'entraînement dans le moteur si le troisième commutateur à semi-conducteurs commandable (60) est bloqué assez tôt pour que l'énergie dans la branche à couper soit dissipée par circulation de courant au plus tard à l'instant de commutation (tk1, tk2) ;
ce courant circulaire (Fig. 2 : i31 ; Fig. 3 : i31') est surveillé ;
lorsque ce courant circulaire atteint une valeur absolue faible prédéfinie (|i31|), le premier et/ou le deuxième commutateur à semi-conducteurs (34, 44) momentanément conducteur est bloqué ;
en fonction de la position de rotation du rotor (22), une partie de l'opération de commutation consiste à désactiver la phase d'alimentation potentielle d'une branche et à activer la phase d'alimentation potentielle de l'autre branche ;
le troisième commutateur à semi-conducteurs (60) est de nouveau rendu passant.

3. Moteur selon la revendication 2, dans lequel une diode de roue libre (38, 48) est chaque fois branchée antiparallèlement sur le premier et le deuxième commutateur à semi-conducteurs commandable (34, 44).

4. Moteur selon la revendication 2 ou 3, dans lequel au moins un des commutateurs à semi-conducteurs commandables (34, 44, 60) est réalisé sous la forme d'un transistor à effet de champ.

5. Moteur selon l'une des revendications 2 à 4, dans lequel une branche d'enroulement (30) est reliée à une borne (D) du commutateur à semi-conducteurs commandable (34) qui lui est associé,
et l'autre borne (S) de ce commutateur à semi-conducteurs (34) est reliée à l'autre borne (S) correspondante du commutateur à semi-conducteurs commandable (44) relié à l'autre branche d'enroulement (32) par une liaison électrique (54),
et un élément de blocage (55), qui ne permet qu'un courant unidirectionnel, est prévu dans la ligne d'alimentation de cette liaison électrique (54).

6. Moteur selon l'une des revendications 2 à 5, dans lequel les branches d'enroulement (30, 32) sont couplées magnétiquement (134) par enroulement bifilaire.

7. Moteur selon l'une des revendications 2 à 6, dans lequel une diode (61 ; 130), en particulier une diode Zener, est branchée antiparallèlement sur le commutateur à semi-conducteurs (60) disposé dans la ligne d'alimentation du circuit parallèle (52).

8. Moteur selon l'une des revendications 2 à 7, dans lequel le commutateur à semi-conducteurs commandable (60) disposé dans la ligne d'alimentation du circuit parallèle (52) est relié par sa sortie (58) reliée aux branches d'enroulement (30, 32) à une électrode d'une diode (112 ; 132) dont l'autre électrode est reliée à une autre borne (56) du moteur (20), afin de limiter ainsi les pointes de tension lors des commutations de ce commutateur à semi-conducteurs (60), lesquelles se produisent en fonctionnement à sa sortie (58) reliée au circuit parallèle (52).

9. Moteur selon l'une des revendications 2 à 8, lequel est disposé dans un ventilateur compact et sert à son entraînement.

10. Moteur selon l'une des revendications 2 à 9, dans lequel un dispositif (26) pour surveiller le potentiel (Fig. 6 : 66, 68) à au moins une des bornes (D) du premier et/ou du deuxième commutateur à semi-conducteurs commandable (34, 44) est prévu pour détecter une valeur faible prédéfinie du courant circulaire (i31).

11. Moteur selon la revendication 10, dans lequel le dispositif (26) est conçu pour détecter l'apparition d'une tension (Fig. 6 : 66, 68) qui est induite par le rotor en rotation dans une branche d'enroulement statorique (30, 32) associée au moins dans une plage de positions de rotation prédéfinie du rotor (22).

12. Moteur selon la revendication 11, dans lequel le dispositif (26) est conçu pour détecter la grandeur de l'amplitude de cette tension induite.

13. Moteur selon la revendication 11, dans lequel le dispositif (26) est conçu pour décaler l'instant (Fig. 4 : t64) de la coupure du troisième commutateur à semi-conducteurs commandable dans le sens de l'avance (Fig. 9 : S94) si la tension induite n'est pas mesurable.

14. Moteur selon la revendication 12, dans lequel le dispositif (26) est conçu pour décaler l'instant (Fig. 4 : t64) de la coupure du troisième commutateur à semi-conducteurs commandable dans le sens du retard (Fig. 9 : S98) si la grandeur de l'amplitude de la tension induite dépasse une valeur prédéfinie (A).

15. Moteur selon l'une des revendications 2 à 14, dans lequel un capteur de position de rotor (24 ; 24') est prévu, dont le signal de sortie (Hall) peut être amené au dispositif de commande (26) et qui est disposé de façon que son signal de sortie permette la commande du début du courant (i30, i32) dans une branche d'enroulement statorique à activer.

16. Moteur selon la revendication 15, dans lequel le capteur de position de rotor (24') est disposé de façon que son signal permette la commande de l'instant de commutation (Fig. 4 : t64) auquel le troisième commutateur à semi-conducteurs commandable (60) est bloqué pour déclencher une opération de commutation.
